# EUROPÄISCHE PATENTSCHRIFT

(11) **EP 1 525 407 B1**
(45) Veröffentlichungstag und Bekanntmachung des Hinweises auf die Patenterteilung: **09.01.2008**
(21) Anmeldenummer: 03766127.9
(22) Anmeldetag: 05.07.2003
(51) Int. Cl.: F16D 13/64, F16D 13/72, F16D 13/74

(54) **KUPPLUNGSANORDNUNG**
CLUTCH ARRANGEMENT
ENSEMBLE EMBRAYAGE

(30) Priorität: 31.07.2002 DE 10234822
(43) Veröffentlichungstag der Anmeldung: 27.04.2005
(73) Patentinhaber: ZF Sachs AG, 97424 Schweinfurt (DE)
(72) Erfinder: SUDAU, Jörg, 97464 Niederwerrn (DE); JAFOUI, Khalid, 96191 Trunstadt (DE); ACKERMANN, Jürgen, 97421 Schweinfurt (DE)
(86) Internationale Anmeldenummer: PCT/EP2003/007223
(87) Internationale Veröffentlichungsnummer: WO 2004/013508

(56) Entgegenhaltungen:
- DE-B- 1 221 503
- US-A- 3 025 686
- US-A- 3 249 189
- US-A- 3 648 545
- US-A- 3 897 860
- US-B1- 6 360 864

## Beschreibung

### Technisches Gebiet

Die vorliegende Erfindung betrifft eine Kupplungsanordnung gemäß dem Oberbegriff des Anspruches 1.

### Stand der Technik

Aus der DE 199 17 893 A1 ist eine in Fachkreisen als nasslaufende Kupplung bezeichnete Kupplungsanordnung bekannt, die mehrere in Reibwechselwirkung miteinander bringbare Reibelemente, im Allgemeinen als Lamellen bezeichnet, umfasst. Durch einen Kupplungskolben können diese Lamellen gegeneinander gepresst werden, so dass zwischen dem Kupplungsgehäuse und einem Abtriebselement eine durch coulombsche Reibung erzeugte Drehmomentübertragung erhalten wird. Insbesondere im Schlupfbetrieb, beispielsweise beim Anfahren, wird durch die reibend aneinander abgleitenden Reibelemente zumindest ein Teil des Antriebsmomentes des Antriebsaggregats in Wärme umgesetzt. Vor allem bei länger anhaltenden Schlupfzuständen, wie z.B. beim Anfahren am Berg, kann dies zu einer Überhitzung im Bereich der Reibelemente und ggf. zur Beschädigung von Reibbelägen derselben führen. Um für Kühlung zu sorgen, ist eine Fluidströmungsanordnung vorgesehen, durch welche, beispielsweise durch eine in einer Getriebeanordnung vorgesehene Fluidförderpumpe, Fluid als Fördermedium in das Kupplungsgehäuse eingeleitet und aus demselben auch wieder abgezogen werden kann. Das Fördermedium strömt dabei entlang der Reibelemente, nimmt Wärme auf und transportiert dieselbe aus dem Bereich der Kupplungsanordnung heraus. Das beim Durchströmen der Kupplungsanordnung erwärmte Fördermedium kann in einem Getriebekühler gekühlt werden. Die auf diese Art und Weise aufgebaute Fluidströmung ist vergleichsweise langsam und führt dazu, dass die verschiedenen Reibelemente mit einer geringen Fluidmenge von beispielsweise 10 l/min umströmt werden. Bei sehr starken Belastungen kann trotz dieser Umströmung oftmals nicht die erforderliche Wärmeabfuhr erreicht werden.

Aus der US 3648545 ist auch eine Kupplungsanordnung bekannt die eine ausgeschnittene Scheibe offenbart. Diese ausgeschnittene Scheibe trägt Reibbelagsegmenten.

### Aufgabe der Erfindung

Es ist die Aufgabe der vorliegenden Erfindung, eine Kupplungsanordnung für ein Kraftfahrzeug bereitzustellen, bei welcher trotz einfacher Ausbildung von Reibelementen auch bei starker Belastung derselben die Gefahr einer zumindest lokalen Überhitzung weitgehend ausgeschlossen ist.

### Darstellung der Erfindung

Erfindungsgemäß wird diese Aufgabe gelöst durch eine Kupplungsanordnung für ein Kraftfahrzeug, umfassend ein mit fluidförmigem Fördermedium befülltes Kupplungsgehäuse, wenigstens ein mit dem Kupplungsgehäuse gemeinsam drehbares erstes Reibelement und wenigstens ein mit einem Abtriebselement gemeinsam drehbares zweites Reibelement, welches zur Herstellung einer Reibwechselwirkung in Anlage an wenigstens einem ersten Reibelement bringbar ist.

Weiter ist vorgesehen, wenigstens ein Reibelement zur Erzeugung einer die Reibelemente wenigstens bereichsweise umströmenden Fluidzirkulation auszubilden.

Da bei der erfindungsgemäßen Kupplungsanordnung durch die Reibelemente selbst eine diese umströmende Fluidzirkulation induziert wird, wird erreicht, dass das im Kupplungsgehäuse vorhandene Fördermedium, bevor es im Rahmen der allgemein vorhandenen Fluidströmung ausgetauscht wird, mehrfach an den Reibelementen entlang strömt und somit auf Grund der vorhandenen Wärmespeicherkapazität des Fördermediums mit diesem auch deutlich mehr Wärme abgeführt werden kann, als dies beim nur einmaligen Strömen entlang der Reibelemente möglich wäre. Diese Anordnung ist besonders bei kurzzeitigen, starken Belastungen vorteilhaft, welche zu einer Erhöhung der Temperatur des Fördermediums führen. Im Rahmen des allgemein vorhandenen Fluidaustausches wird dieses auf deutlich höhere Temperaturen gebrachte Fördermedium aus dem Kupplungsgehäuse abgezogen und im Getriebekühler oder einem sonstigen Kühler wieder auf normale Temperatur gebracht. Es lassen sich durch die erfindungsgemäße, vermittels der Reibelemente selbst induzierte Fluidzirkulation Strömungen induzieren, bei welchen die Reibelemente oder zumindest ein Teil derselben mit einer hohen Fluidmenge, beispielsweise von 3000 l/min umströmt werden.

Eine Maßnahme, durch welche eine sehr hohe Fluidfördereffizienz bereitgestellt werden kann, ist, dass wenigstens ein erstes Reibelement und wenigstens ein zweites Reibelement zur Erzeugung der Fluidzirkulation ausgebildet sind. Vorzugsweise kann vorgesehen sein, dass wenigstens ein erstes Reibelement ebenso wie wenigstens ein zweites Reibelement zumindest eine Fluidförderfläche aufweist. Es sei darauf hingewiesen, dass im Sinne der vorliegenden Erfindung eine Fluidförderfläche eine Fläche ist, welche auf das zur Zirkulation anzuregende Fördermedium einwirkt, um dieses in Bewegung zu versetzen, also beispielsweise um dem Fördermedium eine Strömungsgeschwindigkeit in Umfangsrichtung zu geben und somit dafür zu sorgen, dass fliehkraftbedingt dieses Fördermedium sich nach radial außen bewegt. Gleichwohl ist eine Fluidförderfläche auch eine Fläche, welche beispielsweise nach Art eines Turbinenrades zur Momentenabstützung eines zur Strömung angeregten Fluids sorgt und somit letztendlich insbesondere auch auf Grund der vorhandenen Drehzahldifferenz zwischen zwei Fluidförderflächen zur Förderung des Fördermediums und somit zur Erzeugung der die erfindungsgemäße Kühlwirkung induzierenden Fluidzirkulation beiträgt. Ein weiterer bedeutungsvoller Aspekt bei der vorliegenden Erfindung ist, dass durch die aufgebaute Fluidzirkulation nicht nur verbessert Wärme aus dem Bereich der thermisch beaufschlagten Oberflächen abgeführt werden kann, sondern dass durch Drehmomentenabstützung diese Fluidzirkulation auch nach Art einer Pumpe/Turbine-Anordnung zur Drehmomentübertragung beitragen kann, das erste Reibelement demnach als Pumpenelement und das zweite Reibelement als Turbinenelement wirksam ist Dies bedeutet, dass bei einer derartigen Kupplungsanordnung die Drehmomentübertragungskapazität erhöht werden kann. Des Weiteren ist diese durch Fluidzirkulation erzeugte Drehmomentübertragung bereits in einem Zustand wirksam, in dem die reibend miteinander in Wechselwirkung bringbaren Oberflächenbereiche noch nicht in Kontakt stehen.

Um eine möglichst gute Fluidfördereffizienz bereitstellen zu können, kann gemäß der vorliegenden Erfindung vorgesehen sein, die wenigstens eine Fluidförderfläche mit einer Radialerstreckungskomponente und einer Axialerstreckungskomponente auszubilden.

Beispielsweise kann vorgesehen sein, die wenigstens eine Fluidförderfläche wenigstens bereichsweise mit einer im Wesentlichen tangential orientierten Flächennormalen auszubilden.

Bei einer besonders einfach aufzubauenden erfindungsgemäßen Ausgestaltungsform kann die Fluidfördereffizienz dadurch vergrößert sein, dass das wenigstens eine erste Reibelement oder/und das wenigstens eine zweite Reibelement an wenigstens einer axialen Seite der wenigstens einen Fluidförderfläche einen Reibbelag aufweist. Eine nochmals weitere Erhöhung der Fluidfördereffizienz wird bewirkt, indem das wenigstens eine erste Reibelement oder/und das wenigstens eine zweite Reibelement an beiden axialen Seiten jeweils Fluidförderflächen bereitstellende Reibbeläge aufweist.

Eine hohe Fluidfördereffizienz wird bereitgestellt, wenn das wenigstens eine erste Reibelement oder/und das wenigstens eine zweite Reibelement einen Trägerbauteil aufweist, welcher vorzugsweise an wenigstens einer Axialseite einen Reibbelag, insbesondere in Form eines Reibbelagsegmentes trägt, und dass wenigstens eine Fluidförderfläche durch den Trägerbauteil bereitgestellt ist. Dies kann beispielsweise dadurch erreicht werden, dass der Trägerbauteil in Umfangsrichtung aufeinander folgende, ohne Axialversatz zueinander ausgebildete Trägerbauteilsegmente aufweist, welche in Umfangsrichtung durch Aussparungen des Trägerbauteils voneinander getrennt sind, um auf diese Weise die wenigstens eine Fluidförderfläche durch einen umfangsseitigen Begrenzungsrand des Trägerbauteilsegmentes bereitzustellen. Dadurch entsteht eine Mehrzahl von in Umfangsrichtung aufeinander folgenden Fluidförderflächen an dem wenigstens einen ersten Reibelement oder/und dem wenigstens einen zweiten Reibelement und damit eine sehr hohe Fluidfördereffizienz. Um dennoch den konstruktiven Aufwand so einfach als möglich zu halten, wird vorgeschlagen, die Aussparungen am Trägerbauteil durch Entfernung von Material innerhalb eines im Wesentlichen ringartigen Blechrohlings zu bilden.

Da sich, wie bereits erwähnt, in Umfangsrichtung zwischen jeweils zwei Trägerbauteilsegmenten jeweils eine Aussparung befindet, kann durch Vorgabe der Anzahl an Aussparungen pro Trägerbauteil auf sehr einfache Weise auch die Anzahl an Trägerbauteilsegmenten und damit die Anzahl an Fluidförderflächen vorgegeben werden. Es bereitet daher keinerlei Probleme, den Trägerbauteil des ersten Reibelementes mit einer anderen Anzahl von Trägerbauteilsegmenten auszubilden als den Trägerbauteil des zweiten Reibelementes, wobei in beiden Fällen einer ungeradzahligen Menge an Trägerbauteilsegmenten der Vorzug gegenüber einer geradzahligen Menge zu geben ist. Auf diese Weise kann vermieden werden, dass sich, eine geradzahlige Menge an Trägerbauteilsegmenten vorausgesetzt, zwischen den beiden Reibelementen Schwingungsanregungen ergeben, die im ungünstigsten Fall nicht nur Schwingungsanregungen einer Kolben-Brennkraftmaschine verstärken und damit Brummgeräusche im Antriebsstrang bewirken, sondern sogar zu Schäden im Bereich des Antriebsstranges führen könnten. Zur Vermeidung derartiger Probleme wird die Anzahl der für die Fluidzirkulation zwischen erstem Reibelement und zweitem Reibelement zuständigen Fluidförderflächen derart ausgewählt, dass kein Faktor 2 als gemeinsamer Teiler zustande kommt. Aus diesem Grund werden für die Mengenbemessung vorzugsweise Primzahlen verwendet, und zwar unterschiedlichen Betrags bei erstem und zweitem Reibelement.

Bei Ausbildung der Trägerbauteilsegmente mit Reibbelägen kommt den letztgenannten, wie bereits erwähnt, über ihre eigentliche Funktion hinausgehend auch die Zusatzfunktion einer Vergrößerung der Fluidförderflächen zu, da insbesondere bei Reibbelägen, deren umfangsseitige Belagsegmentenden mit den Begrenzungsrändern der Trägerbauteilsegmente bündig ausgebildet sind, sich eine gemeinsame Fläche ergibt, die auf das Fördermedium einwirkt, welches in die Aussparungen des Trägerbauteiles eingedrungen ist. Dieses Fördermedium wird aufgrund der Bewegung der Fluidförderflächen relativ zum Kupplungsgehäuse jeweils in Radialrichtung gefördert, und zwar vorzugsweise innerhalb eines zwischen jeweils zwei Fluidförderflächen verbleibenden Strömungskanals. Untersuchungen haben hierbei ergeben, dass die Materialquerschnitte der Reibbelagsegmente in Bezug zu den Materialquerschnitten der Trägerbauteilsegmente erheblichen Einfluss auf die zwischen dem ersten Reibelement und dem zweiten Reibelement verlaufende Strömung haben können. So ist beispielsweise ein Trägerbauteil mit geringem Materialquerschnitt in Kombination mit Reibbelagsegmenten vergleichsweise großem Materialquerschnitt vorteilhaft, da die dicken Reibbeläge einen tiefen Strömungskanal nach radial außen zulassen, welcher dem radial durchströmenden Fluid einen problemlosen Übertritt in den Bereich eines axial benachbarten Bauteiles, wie beispielsweise einer belaglosen Zwischenlamelle oder aber einem anderen Reibelement ermöglicht. Aus einem tieferen Strömungskanal austretendes Fördermedium erzeugt aufgrund seines vergleichsweise großen Abstandes zum axial jeweils benachbarten Bauteil einen weniger starken Aufprall als Fördermedium, dem aufgrund eines sehr flachen Strömungskanals kaum eine Distanz zur Umlenkung in Achsrichtung zur Verfügung steht. Außerdem würde das Fördermedium beim Auftreffen auf eine umfangsseitige Radialkante des benachbarten Bauteiles bei zunehmendem Materialquerschnitt desselben umso stärker abgebremst. In Achsrichtung schmälere Trägerbauteile und breitere Reibbeläge reduzieren somit axiale sowie in Umfangsrichtung weisende Impulskräfte zwischen den Reibelementen, die letztendlich zu unerwünschten Schwingungen führen könnten.

Mit Vorzug sind die Trägerbauteile lamellenartig ausgebildet und stehen beispielsweise über Kopplungsvorsprünge, die Teil einer Verzahnung sind, entweder mit dem Kupplungsgehäuse oder mit einem Abtriebselement in formschlüssiger, aber axial verlagerbarer Drehverbindung. Ist an einem der Trägerbauteile die Verzahnung als Außenverzahnung ausgebildet, so erstrecken sich die Trägerbauteilsegmente nach radial innen, so dass funktionsmäßig ein erstes Reibelement im Sinne einer Pumpenlamelle entsteht. Umgekehrt ist bei Ausbildung eines Trägerbauteiles mit einer Verzahnung als Innenverzahnung und mit nach radial außen verlaufenden Trägerbauteilselementen ein zweites Reibelement im Sinne einer Turbinenlamelle realisiert. Aufgrund ihrer konstruktiven Ausbildung bewirkt die Pumpenlamelle eine Fluidförderung von radial innen nach radial außen, während die Turbinenlamelle eine Fluidförderung in Gegenrichtung zur Folge hat. Axial zwischen Pumpen- und Turbinenlamelle kann, wie bereits erwähnt, eine Zwischenlamelle vorgesehen sein, die allerdings zwingend zur Aufrechterhaltung des gewünschten Strömungsfeldes eine axiale Strömung passieren lassen muss, beispielsweise durch Ausbildung mit axialen Durchlässen für die Strömung. Selbstverständlich sollten auch Pumpen- und Turbinenlamelle mit derartigen Durchlässen ausgebildet sein. Bezogen auf die Zwischenlamellen können diese Durchlässe jeweils im Bereich einer der ohnehin vorhandenen Innen- oder Außenverzahnungen vorgesehen sein, und zwar beispielsweise durch radial vergrößerte Ausbildung der Zwischenräume zwischen den Kopplungsvorsprüngen und den jeweils zugeordneten Gegenkopplungsvorsprüngen. Es ist aber auch ebenso denkbar, zusätzliche Durchgänge im radialen Erstreckungsbereich des jeweiligen Trägerrings vorzusehen. Selbstverständlich lässt sich durch vergrößerte Ausbildung dieser Durchlässe und/oder Durchgänge das Fördermedium in Achsrichtung mit geringeren aufprallbedingten Impulsen durch die Kupplungsanordnung führen als bei kleineren Durchlässen und/oder Durchgängen. Vorzugsweise ist deshalb anspruchsgemäß zumindest einem Teil der Durchlässe zur Vergrößerung des jeweiligen Durchflussquerschnittes zumindest ein Durchgang zugeordnet, der im Trägerring der Zwischenlamelle ausgebildet ist. Mit Vorzug sind auch in den Trägerbauteilen von erstem und/oder zweitem Reibelement vergleichbare Durchlässe sowie Durchgänge vorgesehen.

Zurückkommend auf die Fluidförderflächen von erstem Reibelement oder zweitem Reibelement können diese aufgrund unterschiedlicher geometrischer Ausführung erheblichen Einfluss auf das Verhalten des Förderfluidstromes haben. Durch eine entgegen der Drehrichtung gekrümmte Fluidförderfläche beispielsweise kann der hydrodynamische Anteil des Volumenstromes an der Gesamtwirkung reduziert werden, während dieser Anteil durch eine in Drehrichtung gekrümmte Fluidförderfläche erhöht wird. Im letztgenannten Fall kann, bei allerdings verschlechterter Regelbarkeit der Kupplungsanordnung, ein Kriechverhalten erzielt werden, während ein reduzierter hydrodynamischer Anteil die Regelbarkeit der Kupplungsanordnung verbessert, ein Kriechverhalten aber nicht mehr feststellbar zulässt.

Die Fluidförderflächen können ebenfalls mit einer Steigung in Achsrichtung ausgebildet sein, wodurch Einfluss auf Sekundärströmungseffekte sowie auf den Strömungsverlauf unmittelbar an der Gegenreibfläche genommen werden kann.

Über die Anzahl der Aussparungen in den Trägerbauteilen wird nicht nur die Anzahl der Fluidförderflächen vorgegeben, sondern auch diejenige der Reibbelagsegmente. Hierdurch ergibt sich eine vorzügliche Möglichkeit einer feinfühligen Einstellung der wirksamen Flächenpressung für die Übertragung eines vorbestimmten Drehmomentes. Für die Reibbelagsegmente kann ab einer gewissen Dicke Papier als Reibbelagsmaterial für die auftretenden Kräfte, die sich insbesondere durch Scherkräfte und Torsionsmomente aufgrund der Elastizität des Trägerbauteiles ergeben, zu anfällig werden und auch aus Kostengesichtspunkten ungeeignet sein. Deshalb kann es sinnvoll sein, die Reibbelagsegmente aus einem Kompositwerkstoff, wie z.B. einem Kohlenfaserwerkstoff, zu bilden.

Eine Vergrößerung des Anteils der Reibbelagsegmente am Trägerbauteil geht stets mit einer Reduzierung des mit den Strömungskanälen zur Verfügung stehenden Durchflussvolumens für das Fördermedium einher. Bedingt durch diese Situation bietet sowohl das erste Reibelement als auch das zweite Reibelement jeweils die Möglichkeit, optimal auf die jeweiligen Anforderungen an Momentenübertragungsfähigkeit einerseits und an Kühlwirkung andererseits abgestimmt zu werden.

Die vorliegende Erfindung wird nachfolgend mit Bezug auf die beiliegenden Zeichnungen anhand bevorzugter Ausgestaltungsformen detailliert beschrieben. Es zeigen:
- Fig. 1: ein Prinzip-Schaltbild eines Antriebsstranges mit einem Antriebsorgan, einer Kupplungsanordnung und einer Getriebeanordnung;
- Fig. 2: eine Längsschnittansicht der Kupplungsanordnung;
- Fig. 3: ein bei der Kupplungsanordnung der Fig. 2 eingesetztes erstes Reibelement, wirksam als Turbinenlamelle;
- Fig. 4: eine Ansicht des Reibelementes aus der Blickrichtung A in Fig. 3;
- Fig. 5: ein bei der Kupplungsanordnung der Fig. 2 eingesetztes zweites Reibelement, wirksam als Turbinenlamelle;
- Fig. 6: eine Abwandlung des in Fig. 3 dargestellten Reibelements;
- Fig. 7a: eine vergrößerte Herauszeichnung von Durchlässen für Förderfluid am Reibelement gemäß Fig. 3 oder Fig. 6;
- Fig. 7b: wie Fig. 7a, aber mit radial vertieften Durchlässen;
- Fig. 7c: wie Fig. 7a, aber mit Verzicht auf einen Kopplungsvorsprung zur Vergrößerung des Durchlasses;
- Fig. 8: eine Abwandlung des in Fig. 5 dargestellten Reibelementes;
- Fig. 9a: ein erstes Reibelement ohne Reibbeläge, wirksam als Zwischenlamelle;
- Fig. 9b: ein zweites Reibelement ohne Reibbeläge, wirksam als Zwischenlamelle;
- Fig. 10a: ein axialer Ausschnitt aus der Kupplungsanordnung gemäß Fig. 2;
- Fig. 10b: ein axialer Ausschnitt aus einer anderen Kupplungsanordnung
- Fig. 11: eine schematische Darstellung des Übertritts von Förderfluid zwischen zwei Reibelementen, davon eines mit einer Fluidförderfläche und eines mit einer Anströmfläche;
- Fig. 12a: eine vergrößerte Herauszeichnung der strichpunktiert in Fig. 11 gezeichneten Einzelheit, wobei die Anströmfläche mit winkliger Ausrichtung ausgebildet ist;
- Fig. 12b: wie Fig. 12a, aber mit anderer winkliger Ausrichtung der Anströmfläche;
- Fig. 13: wie Fig. 8, aber mit in Drehrichtung gekrümmten Fluidförderflächen;
- Fig. 14: wie Fig. 6, aber mit entgegen der Drehrichtung gekrümmten Fluidförderflächen.

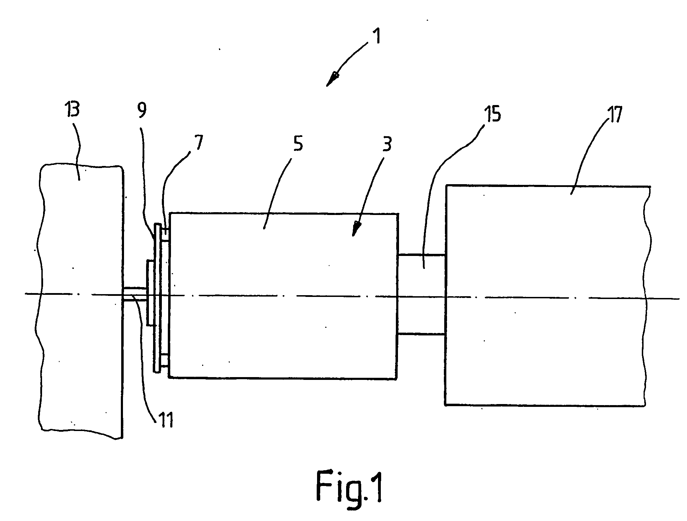

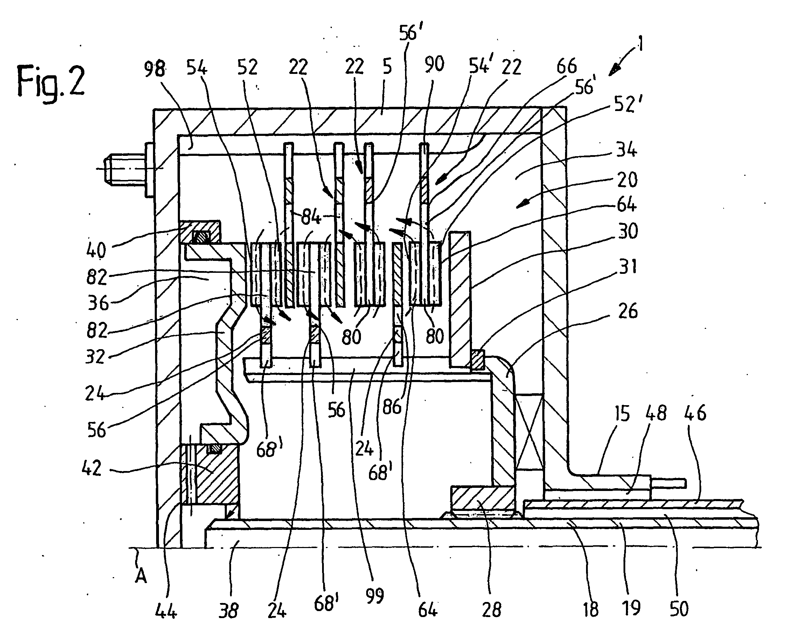

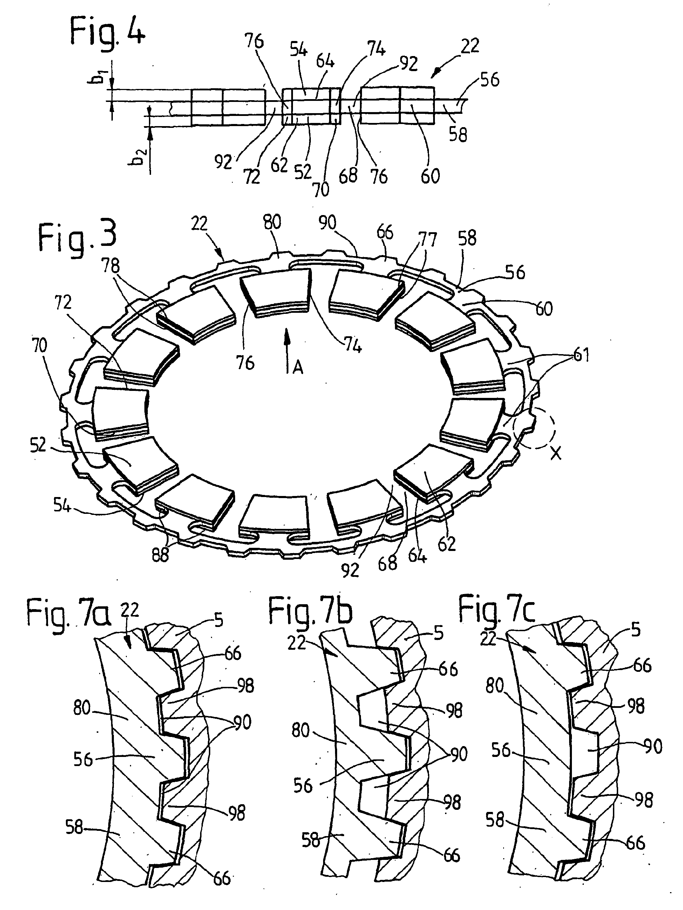

In Fig. 1 ist ein Antriebsstrang 1 mit einer erfindungsgemäßen Kupplungsanordnung 3 schematisch dargestellt. Die Kupplungsanordnung 3 umfasst ein Kupplungsgehäuse 5, das über eine Mehrzahl von Befestigungsorganen 7 und ein Kopplungselement 9, wie z.B. eine Flexplatte, mit einer Antriebswelle 11, beispielsweise die Kurbelwelle einer Brennkraftmaschine 13, zur gemeinsamen Drehung gekoppelt werden kann. An der von der Antriebswelle 11 entfernt liegenden Axialseite weist das Kupplungsgehäuse 5 eine Gehäusenabe 15 auf, die beispielsweise in eine Getriebeanordnung 17 eingreift und dort eine nicht gezeigte Fluidförderpumpe zur Drehung antreibt. Zur Gehäusenabe 15 konzentrisch angeordnet ist eine in Fig. 2 gezeigte Abtriebswelle 18, die mit ihrem freien Ende in den Innenraum 20 des Kupplungsgehäuses 5 ragt. Diese Abtriebswelle 18 kann beispielsweise eine Getriebeeingangswelle sein.

Im Kupplungsgehäuse 5 ist eine Mehrzahl von ersten Reibelementen 22, welche mit dem Kupplungsgehäuse 5 zur gemeinsamen Drehung gekoppelt sind, sowie eine Mehrzahl von zweiten Reibelementen 24, welche über ein Verbindungselement 26 und eine Abtriebsnabe 28 mit der Abtriebswelle 18 zur gemeinsamen Drehung gekoppelt sind, vorgesehen. Das Verbindungselement 26 und die Abtriebsnabe 28 können ebenso wie die Abtriebswelle 18 Teil eines Abtriebsorgans 19 sein. An dem Verbindungselement 26 ist ein Widerlagerelement 30 drehfest und zumindest in einer axialen Richtung durch einen Sicherungsring 31 feststehend vorgesehen. Zwischen diesem Widerlagerelement 30 und einem Kupplungskolben 32 liegen die ersten Reibelemente 22 und die zweiten Reibelemente 24. Durch den Kupplungskolben 32 wird der Innenraum 20 des Kupplungsgehäuses 5 in einen ersten Raumbereich 34, welcher die Reibelemente 22, 24 enthält, und einen zweiten Raumbereich 36, in den über eine in der Abtriebswelle 18 vorgesehene Zentralöffnung 38 Fördermedium einleitbar ist, unterteilt. Um den zweiten Raumbereich 36 bezüglich des ersten Raumbereichs 34 abzudichten, ist der im Wesentlichen ringartig ausgebildete Kupplungskolben 32 radial außen und radial innen auf jeweiligen Lagerungselementen 40, 42 unter Zwischenlagerung von Dichtungselementen fluiddicht, jedoch axial verschiebbar aufgenommen. In dem radial inneren Lagerungselement 42 sind mehrere Fluidströmungskanäle 44 vorgesehen, welche die Zufuhr von Fördermedium in den zweiten Raumbereich 36 zulassen.

Fördermedium kann auch in den ersten Raumbereich 34 eingeleitet oder aus diesem abgeführt werden. Zu diesem Zwecke ist beispielsweise in dem zwischen der Abtriebswelle 18 und der Gehäusenabe 15 gebildeten Raumbereich ein hohlzylindrisches Trennelement 46 vorgesehen, welches einen Strömungsraum 48 zwischen der Gehäusenabe 15 und sich selbst bildet und welches weiter einen Strömungsraumbereich 50 zwischen der Abtriebswelle 18 und sich selbst bildet. Es kann beispielsweise von der in der Getriebeanordnung vorgesehenen Fluidförderpumpe Arbeitsfluid durch den Strömungsraumbereich 48 in den Raumbereich 34 eingeleitet werden, in welchem es nach radial außen strömt. Das Fördermedium umströmt die Reibelemente 22, 24, im wesentlichen axial, tritt dann nach radial innen und wird über den Strömungsraumbereich 50 wieder abgezogen. Auf diese Art und Weise kann das, wie im Folgenden noch beschrieben, im Kupplungsgehäuse 5 erwärmte Fördermedium kontinuierlich ausgetauscht und durch kühleres Fördermedium ersetzt werden.

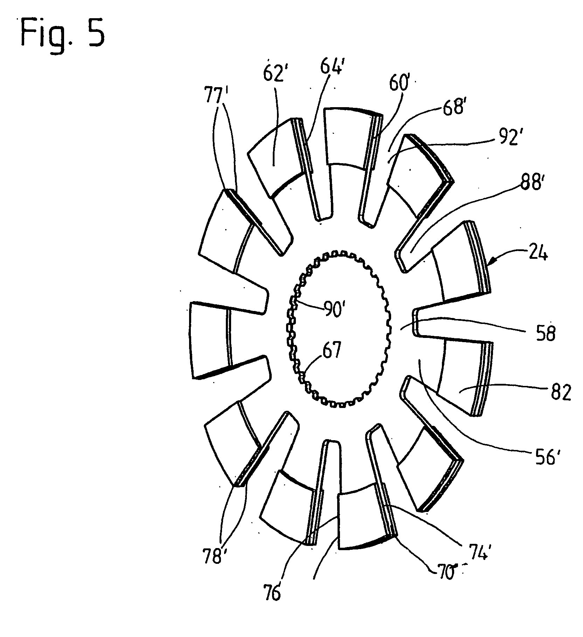

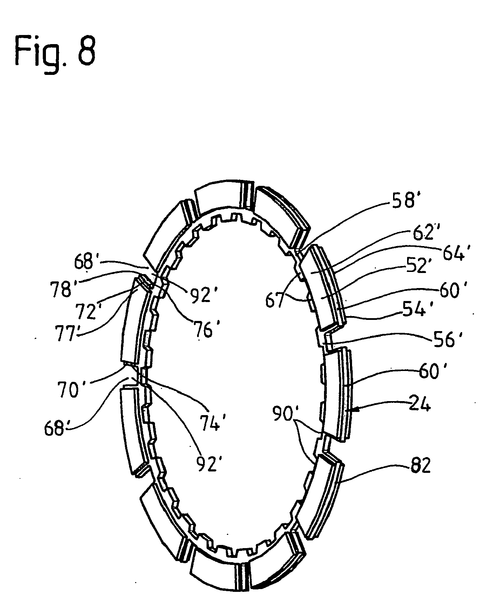

Zumindest ein Teil der ersten Reibelemente 22 und ein Teil der zweiten Reibelemente 24 trägt an seinen beiden Axialseiten jeweils Reibbeläge 52, 52', 54, 54'. Diesen Reibbelägen 52, 52', 54, 54' liegt dann jeweils ein weiteres Reibelement 22, 24 zur reibmäßigen Wechselwirkung axial gegenüber. Die verschiedenen Reibelemente 22, 24 sind am Kupplungsgehäuse 5 bzw. dem Kopplungselement 26 durch axialverzahnungsartigen Eingriff drehfest und in Richtung der Drehachse 55 axial verlagerbar getragen. Der Aufbau eines derartigen mit Reibbelägen 52, 52', 54, 54' versehenen Reiborgans wird im Folgenden anhand der Figuren 3 und 4 mit Bezug auf ein erstes Reibelement 22 beschrieben. Der grundsätzliche Aufbau für die mit Reibbelägen 52, 52', 54, 54' versehenen zweiten Reibelemente 24 wird anschließend anhand der Fig. 5 und 8 behandelt.

Man erkennt in Fig. 3, dass das erste Reibelement 22 mit einem Trägerbauteil 56 ausgebildet ist, der einen Trägerring 58 und von diesem im wesentlichen radial ausgehende Trägerbauteilsegmente 60 aufweist. Bei Betrachtung von radial innen her mit Blickrichtung A erkennt man durch Darstellung in Fig. 4, dass der Trägerbauteil 56 ebenflächig ist und die Trägerbauteilsegmente 60 als Belagtrageabschnitte vorgesehen sind, die an ihren von einander abgewandt liegenden Axialseiten Reibbelagsegmente 62 bzw. 64 der Reibbeläge 52, 54 tragen, wobei diese durchaus auch über unterschiedliche Materialquerschnitte b1, b2 verfügen können. Am Trägerring 58 sind an dessen von den Trägerbauteilsegmenten 60 abgewandter Radialseite Kopplungsvorsprünge 66 in Form einer Verzahnung vorgesehen, durch welche, wie Fig. 7a im Einzelnen zeigt, die drehfeste Verbindung mit entsprechenden Gegenkopplungsvorsprüngen 98 des Kupplungsgehäuses 5 erfolgt.

Man erkennt in Fig. 3 und 4 weiter, dass die in Umfangsrichtung aufeinander folgenden Trägerbauteilsegmente 60 durch Aussparungen 68 voneinander getrennt sind. Diese Aussparungen 68 erstrecken sich vom Trägerring 58 ausgehend, nach radial innen und sind in Umfangsrichtung jeweils durch die umfangsseitigen Begrenzungsränder 70, 72 der benachbarten Trägerbauteilsegmente 60 begrenzt. Beispielsweise können die jeweiligen umfangsseitigen Begrenzungsränder 70, 72 jeweils mit zu einer Umfangskreislinie tangential stehenden Flächennormalen ausgebildet sein und bilden Fluidförderflächen 74, 76, die durch die Reibbelagsegmente 62, 64 axial vergrößert werden, und zwar insbesondere dann, wenn die umfangsseitigen Begrenzungsränder 77, 78 der Reibbelagsegmente 62, 64 bündig mit den umfangsseitigen Begrenzungsrändern der Trägerbauteilsegmente 70, 72 positioniert sind. Dabei wirken die Fluidförderflächen 74, 76 der ersten Reibelemente 22, welche mit dem Kupplungsgehäuse 5 zur gemeinsamen Drehung gekoppelt sind, beispielsweise bei einem Einkuppelelement, bei welchem die ersten Reibelemente 22 eine deutlich höhere Drehzahl aufweisen als die zweiten Reibelemente 24, als Pumpenschaufelflächen und sorgen in ihrer Funktion als Pumpenlamelle 80 dafür, dass in ihrem Bereich eine nach radial außen geführte Fluidströmung erzeugt wird. In gleicher Weise wirken die an den zweiten Reibelementen 24 in entsprechender Weise bereitgestellten Fluidförderflächen 74', 76' (Fig. 5 oder 8), als Turbinenschaufelflächen, realisiert an einer Turbinenlamelle 82, welche auf Grund der vorhandenen Drehzahldifferenz zwischen den ersten Reibelementen 22 und den zweiten Reibelementen 24 für das durch die Fluidförderflächen 74, 76 der ersten Reibelemente 22 in Bewegung gesetzte Fördermedium zur Momentenabstützung dienen und dabei dieses Fördermedium nach radial innen leiten. Dieses mittels der Fluidförderflächen 74', 76' der zweiten Reibelemente 24 nach radial innen geleitete Fördermedium ersetzt also das durch die Fluidförderflächen 74, 76 der ersten Reibelemente 22 von radial innen nach radial außen geförderte Fördermedium. Es wird somit, wie durch strichlierte Pfeile in Fig. 2 eingezeichnet, eine Fluidzirkulation aufgebaut, die der Fluidzirkulation entspricht, wie sie durch ein Pumpenrad und ein Turbinenrad eines hydrodynamischen Drehmomentwandlers oder einer Fluidkupplung erzeugt wird.

Die bei der erfindungsgemäßen Kupplungsanordnung 3 erzeugte Fluidzirkulation führt dazu, dass unabhängig von dem angesprochenen Austausch des im Kupplungsgehäuse 5 vorhandenen Fördermediums, welcher Fluidaustausch beispielsweise mit einer Rate von 10 I/min erfolgen kann, eine permanente Fluidzirkulation und Umströmung der Reibelemente 22, 24 induziert wird, welche beispielsweise eine Umströmung dieser Reibelemente 22, 24 mit einer Flüssigkeitsmenge von 3000 l/min erzeugen kann. Auf diese Weise kann die im Reib- oder Schlupfbetrieb in den verschiedenen Reibelementen 22, 24 erzeugte Reibwärme vor allem bei diese Reibelemente stark beanspruchenden Anfahrvorgängen deutlich besser im Fördermedium aufgenommen werden. Dieser Fluidzirkulation ist der vergleichsweise langsame Fluidaustausch überlagert, so dass ständig das durch die Zirkulation auf vergleichsweise hohe Temperatur gebrachte Fluid zum Teil abgezogen wird und durch kühleres Fluid ersetzt wird.

Es sei darauf hingewiesen, dass selbstverständlich das in Fig. 2 dargestellte Prinzip der Erzeugung einer Fluidzirkulation unabhängig von der Anzahl an ersten Reibelementen bzw. zweiten Reibelementen bereitgestellt werden kann. Weitere diesbezügliche Schaltungsvarianten sind beispielsweise der DE 101 25 628.0 entnehmbar, weshalb der Offenbarungsgehalt dieser älteren Patentanmeldung in die vorliegende Patentanmeldung aufgenommen werden soll.

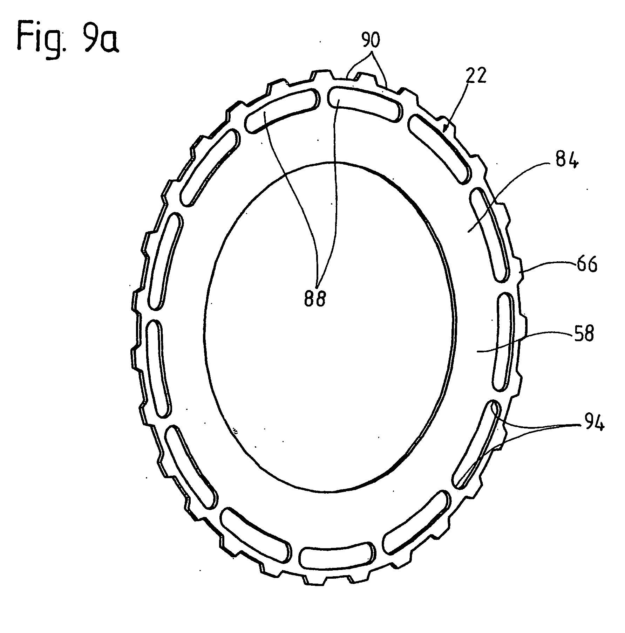

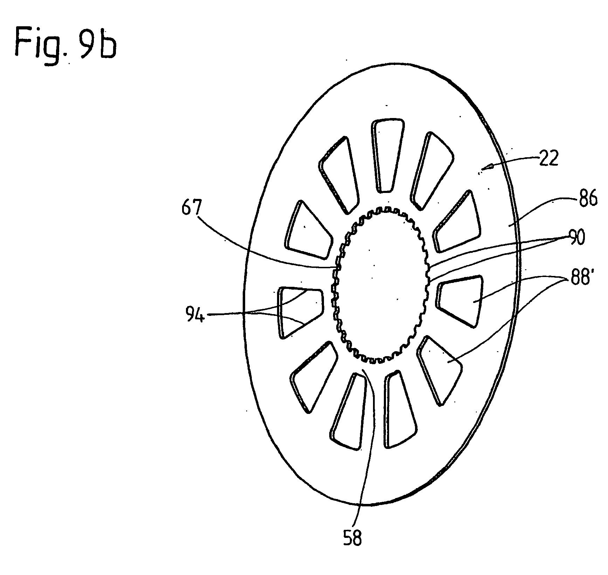

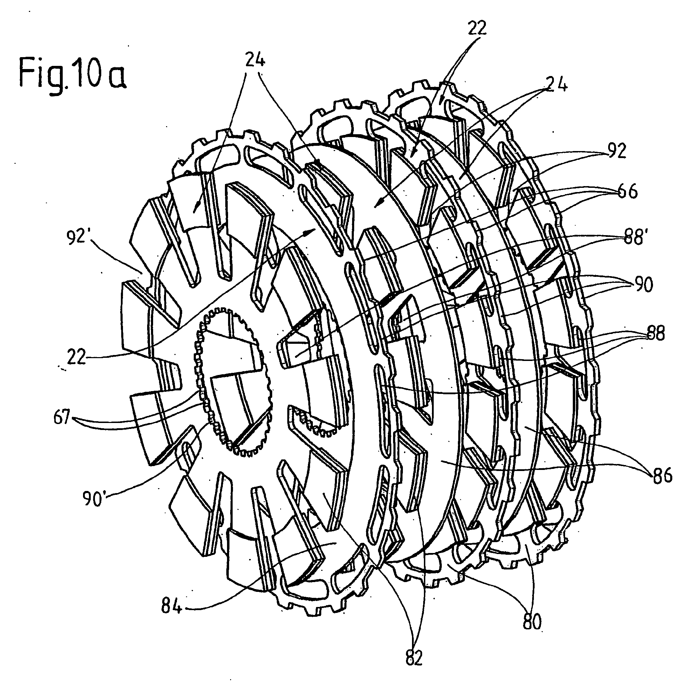

Zurückkommend auf die in Fig. 2 dargestellte Ausführung sind die dort vorgesehenen Reibelemente 22, 24 in Fig. 10a vergrößert und in axial auseinander gezogener Darstellungsweise herausgezeichnet. Die zur Fluidförderung ausgebildeten ersten Reibelemente 22 sind aufeinander folgend angeordnet und nehmen ein im Wesentlichen plattenartig ausgebildetes zweites Reibelement 24 in Form einer belaglosen Zwischenlamelle 84, die in Fig. 9b als Einzelheit herausgezeichnet ist, axial zwischen sich auf. Nach einem als belaglose Zwischenlamelle 84 wirksamen, in Fig. 9a dargestellten Reibelement 22 folgen die zur Fluidförderung ausgebildeten zweiten Reibelemente 24, zwischen welchen wiederum eine belaglose Zwischenlamelle 84 als erstes Reibelement 22 liegt. Hinsichtlich der Gesamtheit der Reibelemente 22, 24 wird eine globale Fluidzirkulation erzeugt. Durch gestaffeltes Anordnen von zur Fluidströmungserzeugung beitragenden ersten Reibelementen 22 und zur Fluidströmungserzeugung beitragenden zweiten Reibelementen 24 können mehrere lokale Fluidzirkulationsbereiche im Bereich der Reibelemente 22, 24 erzeugt werden. Auch ist es nicht zwingend erforderlich, die gleiche Anzahl an zur Fluiderzeugung ausgebildeten ersten Reibelement 22 und zweiten Reibelement 24 bereitzustellen. Beispielsweise können mehr als Pumpenlamellen 80 wirksame erste Reibelemente 22 bereitgestellt werden, und/oder mehr als Turbinenlamellen 82 wirksame Reibelemente 24.

Bei der in Fig. 3 dargestellten Ausführung des ersten Reibelements 22 sind die zur Drehkopplung dienenden und versetzt zueinander liegenden Kopplungsvorsprünge 66 gegenüber den Trägerbauteilsegmenten 60 radial relativ weit nach außen verlagert, so dass in Umfangsrichtung zwischen je zwei Anbindungen 61 der Trägerbauteilsegmente 60 an den Trägerring 58 je ein Durchgang 88 für eine im Wesentlichen ungehinderte Fluidzirkulation in Achsrichtung vorgesehen sein kann. Diesen Durchgängen 88 sind an der radialen Außenseite des Trägerrings 58 vorgesehene Durchlässe 90 zugeordnet, wie sie in Fig. 7a dargestellt sind. Für eine nochmals stärkere Strömung an Fördermedium können die Durchlässe 90 gemäß Fig. 7b jeweils in radialer Richtung größer ausgebildet sein als zur Drehverbindung mit den Gegenkopplungsvorsprüngen 98 des Kupplungsgehäuses 5 erforderlich. Ebenso ist denkbar, gemäß Fig. 7c auf einen Teil der Kopplungsvorsprünge 66 zu verzichten und dadurch zusätzliche großvolumige Durchlässe 90 zu erhalten.

Es sei darauf hingewiesen, dass die Ausgestaltungsformen gemäß den Figuren 7a bis 7c ebenso bei den mit der Abtriebswelle 18 gekoppelten zweiten Reibelementen 24 zur Anwendung kommen können, wobei sich die verschiedenen Durchgänge 88' und Durchlässe 90' bezüglich der die Reibbelagsegmente 62', 64' tragenden Trägerbauteilsegmente 60' dann nach radial innen erstrecken. Diesbezüglich wird auf die Figuren 5 und 9b verwiesen, bei denen die Durchlässe 90' in Umfangsrichtung durch je zwei Kopplungsvorsprünge 67 begrenzt sind, die gemäß Fig. 2 mit Gegenkopplungsvorsprüngen 99 am Verbindungselement 26 drehfest, aber axial verschiebbar, verbunden sind. Die Durchgänge 88' reichen dagegen bei der Turbinenlamelle 82 gemäß Fig. 5 ebenso wie bei der Zwischenlamelle 86 nach Fig. 9b jeweils radial weiter nach innen als die radiale Innenseite das für die Drehmomentübertragung bestimmten Reibbereichs. Fig. 5 zeigt hierzu Trägerbauteilsegmente 60', die gegenüber den Reibbelagsegmenten 62', 64' weiter nach radial innen geführt sind und dort an einem radial sehr kleinen Trägerring 58' des Trägerbauteiles 56' vorgesehen sind.

Im übrigen weist die in der Fig. 5 gezeigte Ausführung des zweiten Reibelementes 24 ebenso wie die Ausführung gemäß Fig. 8 jeweils am Trägerring 58' an dessen nach radial außen ragenden Trägerbauteilsegmenten 60' an beiden Axialseiten derselben Reibbelagsegmente 62', 64' auf, bei denen in Umfangsrichtung gesehen, die umfangsseitigen Begrenzungsränder 77', 78' der Reibbelagsegmente 62', 64' bündig mit den umfangsseitigen Begrenzungsrändern 70', 72' der Trägerbauteilsegmente 60' abschließen, so dass auch hier wiederum die gewünschten Fluidförderflächen 74', 76' entstehen und, jeweils in Umfangsrichtung gesehen, zwischen sich jeweils eine Aussparung 68' begrenzen.

In eingerücktem Zustand der Kupplungsanordnung 3 sind die Aussparungen 68, 68' von Pumpen- und Turbinenlamelle axial durch jeweils zwei Zwischenlamellen 84, 86 begrenzt. Auf diese Weise werden bei einer Pumpenlamelle 80 Strömungskanäle 92 gebildet, die radial außen durch den Trägerring 58 verschlossen, aber nach radial innen offen sind, mithin also radial außen bündig durch die radial äußeren Enden der Fluidförderflächen 74, 76 begrenzt sind. Bei den Turbinenlamellen 82 entstehen dagegen jeweils Strömungskanäle 92', die radial innen durch den Trägerring 58' verschlossen und nach radial außen hin offen sind. Diese wiederum sind radial innen durch die radial inneren Enden der Fluidförderflächen 74', 76' begrenzt.

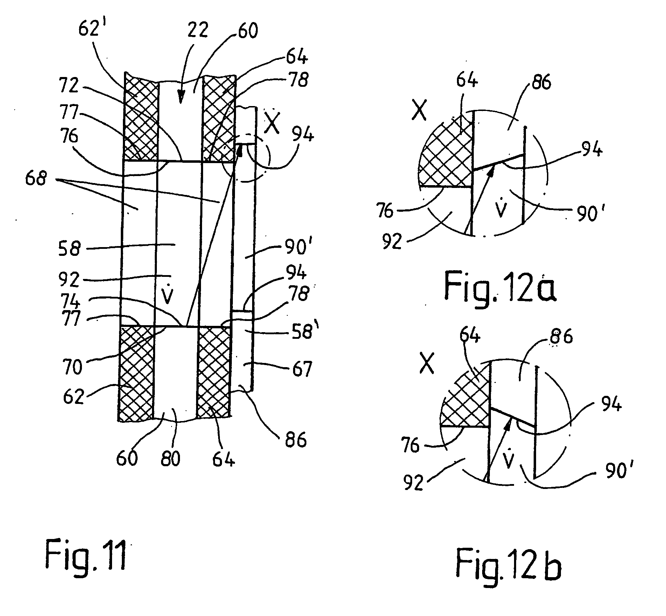

Der Strömungsweg des Fördermediums beim Übergang von der Pumpenlamelle 80 zu den Zwischenlamellen 86 ist schematisch in Fig. 11 dargestellt. Beschleunigt durch eine der Fluidförderflächen 74 der Pumpenlamelle 80 trifft das die Strömungskanäle 92 durchfließende Fördermedium auf den zugeordneten, umfangsseitigen Begrenzungsrand 94 eines Durchlasses 90' oder aber eines Durchganges 88' der Zwischenlamelle 86 und bewirkt dadurch einen Impuls in Umfangsrichtung. Da auch ein Teil des Fördermediums axial auf den Trägerring 58' der Zwischenlamelle 86 oder auf einen dem Durchlass 90' benachbarten Kopplungsvorsprung 67 treffen wird, kann auch ein Impuls in Achsrichtung entstehen. Die letztgenannten Anteile des Fördermediums verschlechtern die Durchströmungseigenschaften, während Impulse, die durch Auftreffen des Fördermediums in Umfangsrichtung verursacht werden, zu Ungleichförmigkeiten in Drehrichtung führen können. Das letztgenannte Problem kann minimiert werden, indem die Zwischenlamelle 86 mit vergleichsweise geringem Materialquerschnitt ausgebildet ist, so dass das Fördermedium eine nur begrenzte Umlenkfläche am umfangsseitigen Begrenzungsrand 94 vorfindet. Zur Reduzierung der Impulse in Achsrichtung ist dagegen eine Erhöhung der Durchflussquerschnitte in Achsrichtung hilfreich, wozu beispielsweise der Durchlass 90' durch zumindest einen zusätzlichen Durchgang 88' vergrößert wird, der im Trägerring 58' der Zwischenlamelle 86 ausgebildet sein kann, wie dies in Fig. 9b dargestellt ist. Alternativ besteht allerdings auch die Möglichkeit, auf die vorgenannten Durchlässe 90' zu verzichten und allein auf vergleichsweise große Durchgänge 88' innerhalb des Trägerringes 58' zu setzen. Vergleichbare Bedingungen finden sich bei einer Zwischenlamelle 84, die als erstes Reibelement 22 wirksam und beispielsweise in Fig. 9a herausgezeichnet ist. Selbstverständlich sind bei der Zwischenlamelle 84 die Durchgänge 88 im radial äußeren Bereich des Trägerringes 58 radial innerhalb der Kopplungsvorsprünge 66 angeordnet, während bei der Zwischenlamelle 86 die Durchgänge 88' im radial inneren Bereich des Trägerringes 58' vorgesehen sind, und zwar radial außerhalb der Kopplungsvorsprünge 67. Es bietet sich an, Zwischenlamellen 84, 86, die gemäß Fig. 9a, 9b mit Durchgängen 88, 88' ausgebildet sind, mit einer Pumpenlamelle 80 zu kombinieren, wie sie in Fig. 3 dargestellt ist, sowie mit einer Turbinenlamelle 82, wie sie die Fig. 5 zeigt. Bei einer derartigen Kupplungsanordnung 3 sind demnach alternativ oder zusätzlich zu den üblicherweise vorgesehenen Durchlässen 90, 90' Durchgänge 88, 88' vorgesehen, die an den ersten Reibelementen 22 für eine Axialströmung radial außerhalb der Reibbelagsegmente 62, 64 sorgen und an den zweiten Reibelementen 24 für eine Axialströmung radial innerhalb der Reibbelagsegmente 62', 64'.

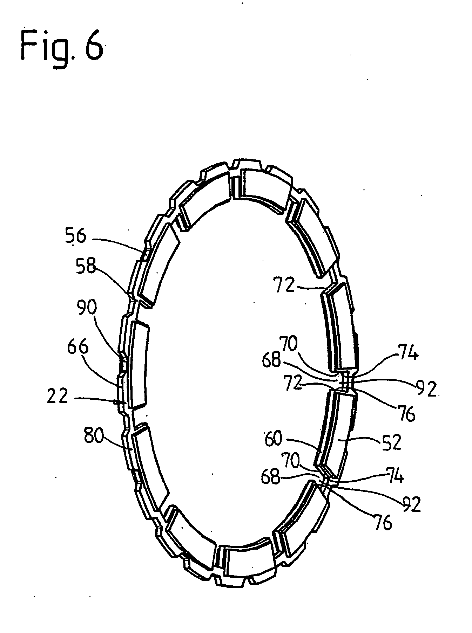

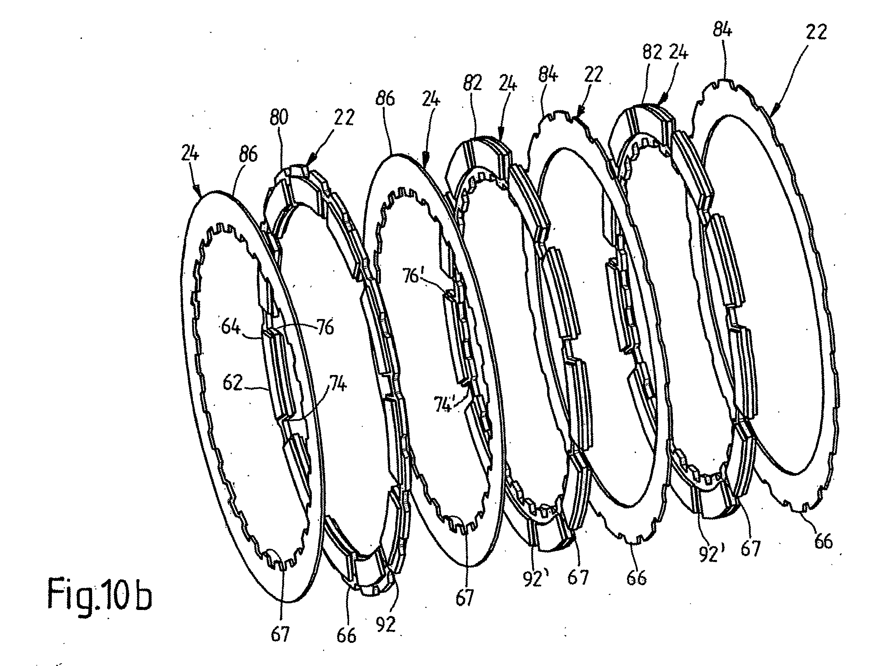

Fig. 10b zeigt in axial auseinander gezogener Darstellungsweise einen axialen Ausschnitt aus einer Kupplungsanordnung 3 mit Reibelementen 22 und 24, wie sie, jeweils als Einzelelemente herausgezeichnet, den Fig. 6 oder 8 entnommen werden können. Hierbei ist an beiden Axialseiten eines ersten Reibelementes 22, das aufgrund seiner Ausbildung mit beidseitigen Reibbelagsegmenten 62, 64 als Pumpenlamelle 80 wirksam ist, jeweils ein als Zwischenlamelle 86 ausgebildetes zweites Reibelement 24 in Anlage bringbar, bei denen die radialen Außendurchmesser im wesentlichen auf die Radialpositionen der radial äußeren Enden der Fluidförderflächen 74, 76 der Pumpenlamelle 80 und damit der radial äußeren Enden der Strömungskanäle 92 abgestimmt sind. Die in Fig. 10b rechte Zwischenlamelle 86 wiederum ist über ein als Turbinenlamelle 82 wirksames zweites Reibelement 24 und eine weitere Zwischenlamelle 84, als erstes Reibelement 22 wirksam, mit einer weiteren Turbinenlamelle 82 und einer weiteren Zwischenlamelle 84 in Wirkverbindung bringbar, sobald die Kupplungsanordnung 3 durch einen Kupplungskolben 32, wie er beispielhaft in Fig. 2 dargestellt ist, in Richtung zu einem Widerlagerelement 30 belastet wird, das ebenfalls in Fig. 2 dargestellt ist. Hervorzuheben ist hierbei, dass die Zwischenlamellen 22 mit ihren radialen Innendurchmessern im wesentlichen an die Radialpositionen der radial inneren Enden der Fluidförderflächen 74', 76' und damit der radial inneren Enden der Strömungskanäle 92' der Turbinenlamellen 82 angeglichen sind.

Aufgrund der Rotationsbewegung von Pumpenlamelle 80, Turbinenlamelle 82 und Zwischenlamellen 84, 86 entsteht folgender Strömungskreis:

Durch die Pumpenlamelle 80 wird Fördermedium durch die Strömungskanäle 92 nach radial außen bis in den Radialbereich des Trägerringes 58 gefördert und dort in Richtung zur benachbarten Zwischenlamelle 86 axial umgelenkt. Das Fördermedium kann die letztgenannte axial problemlos passieren, da deren Außendurchmesser nicht über die radial äußeren Enden der Strömungskanäle 92 der Pumpenlamelle 80 hinausreicht. An den Turbinenlamellen 82 wird das Fördermedium jeweils durch die Strömungskanäle 92' nach radial innen gefördert und dort in Richtung zur jeweils benachbarten Zwischenlamelle 84 umgelenkt, die durch das Fördermedium ebenfalls problemlos passiert werden kann, da deren Innendurchmesser nicht über die radial inneren Enden der Strömungskanäle 92' der Turbinenlamellen 82 nach radial innen reicht. Bei dieser Ausführung sind demnach Durchgänge 88, 88' ebenso wie Durchlässe 90 nicht erforderlich.

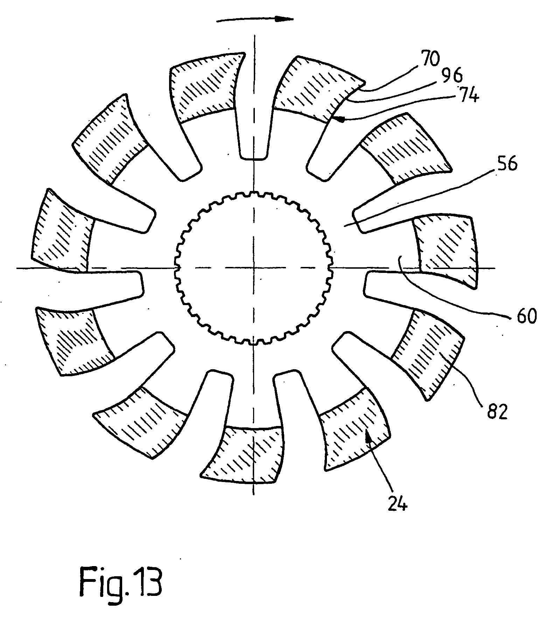

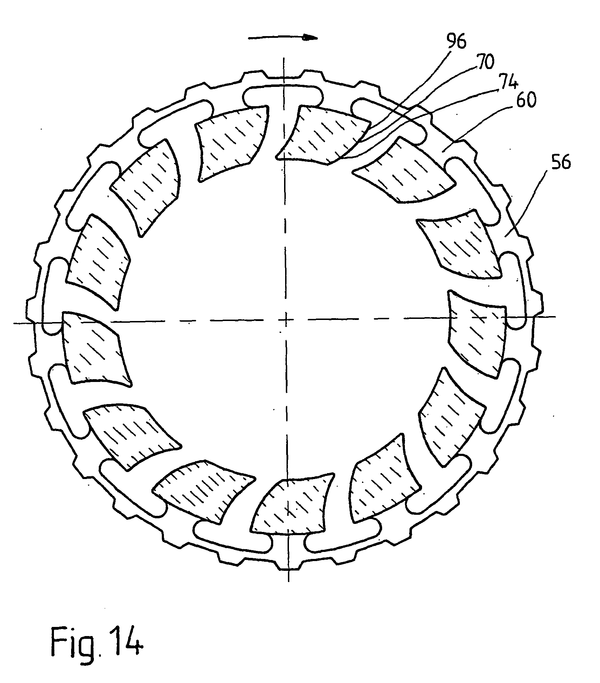

Während bei den bisherigen Ausführungen jeweils von einer im wesentlichen radial ebenflächigen Ausführung der Fluidförderflächen ausgegangen wird, zeigt Fig. 13 Trägerbauteilsegmente 60 eines Turbinenrades 82, die über in anderer Weise ausgebildete Fluidförderflächen 74 verfügen. So sind die letztgenannten an ihren umfangsseitigen Begrenzungsrändern 70 mit je einer Krümmung ausgebildet, die in Richtung der durch einen Pfeil symbolisch eingezeichneten Drehrichtung des Reibelementes vorspringt. Ebenso können aber auch, wie Fig. 14 zeigt, die umfangsseitigen Begrenzungsränder 70 der Trägerbauteilsegmente 60 in Drehrichtung zurückweichen. Im letztgenannten Fall wird der hydrodynamische Anteil am Volumenstrom, der üblicherweise etwa 15 % an der Gesamtwirkung beträgt, reduziert, während durch eine in Drehrichtung gekrümmte Fluidförderfläche der hydrodynamische Anteil erhöht wird. Bei Erhöhung dieses Anteiles ist, bei allerdings verschlechterter Regelbarkeit der Kupplungskennlinie, ein Kriechverhalten erzielbar, während ein reduzierter hydrodynamischer Anteil die Regelbarkeit der Kupplungsanordnung verbessert.

Zurückkommend auf Fig. 11 ist an der Zwischenlamelle 86 der umfangsseitige Begrenzungsrand 94 rechtwinklig zur Erstreckungsrichtung der Zwischenlamelle ausgebildet. Es wäre allerdings ebenso denkbar, gemäß Fig. 12a oder Fig. 12b, die jeweils gemäß einer Einzelheit X herausgezeichnet sind, den umfangsseitigen Begrenzungsrand 94 unter einem vorbestimmbaren Anströmwinkel auszurichten, wodurch Einfluss auf Sekundärströmungseffekte und den Strömungsverlauf direkt an der Gegenreibfläche genommen werden kann.

Aufgrund der konstruktiven Ausbildung sowohl der ersten Reibelemente 22 als auch der zweiten Reibelemente 24 jeweils in ebenflächiger Bauweise besteht die Möglichkeit, durch entsprechende Vorgabe der Anzahl an Reibbelagsegmenten 62, 62' 64, 64' die maximale Momentenübertragungsfähigkeit durch Beeinflussung der Flächenpressung nicht nur optimal einzustellen, sondern darüber hinaus auch durch Vorgabe der Anzahl an Strömungskanälen 92, 92' sowie deren Bemessung in Umfangsrichtung eine Kupplungsanordnung zu schaffen, die über optimale Kühlungseigenschaften verfügt. Darüber hinaus werden die schwingungstechnischen Eigenschaften der Kupplungsanordnung 3 optimiert, wenn bei der Anzahl an Reibbelagsegmenten 62, 62', 64, 64' und, dadurch bedingt, bei der Anzahl an Strömungskanälen 92, 92' jeweils durch 2 nicht teilbare Zahlen, bevorzugt sogar höhere Primzahlen, zugrunde gelegt werden.

Was die Reibbeläge selbst betrifft, so werden diese bevorzugt in Abhängigkeit von ihrer gewählten Materialstärke ausgewählt. Solange einem in Achsrichtung breiten Trägerbauteilsegment 60, 60' ein sehr schmales Reibbelagsegment 62, 62', 64, 64' zugeordnet wird, sind Papierbeläge von Vorteil, während dickere Reibbelagsegmente 62, 62', 64, 64' auf in Achsrichtung dünneren Trägerbauteilsegmenten 60, 60' vielmehr Reibbeläge aus einem Kompositwerkstoff, wie z.B. einem Kohlefaserwerkstoff, bestehen sollten. Gerade bei dickeren Reibbelagsegmenten können bei Verwendung eines Kompositwerkstoffes höhere Scherkräfte und Torsionsmomente ertragen werden, als dies bei Papierbelägen der Fall ist.

### Bezugszeichenliste

- 1: Antriebsstrang
- 3: Kupplungsanordnung
- 5: Kupplungsgehäuse
- 7: Befestigungselemente
- 9: Kupplungselement
- 11: Antriebselement
- 13: Brennkraftmaschine
- 15: Gehäusenabe
- 17: Getriebeanordnung
- 18: Abtriebswelle
- 19: Abtriebsorgan
- 20: Innenraum des Kupplungsgehäuses
- 22: erste Reibelemente
- 24: zweite Reibelemente
- 26: Verbindungselement
- 28: Abtriebsnabe
- 30: Widerlagerelement
- 32: Kupplungskolben
- 34: erster Raumbereich
- 36: zweiter Raumbereich
- 38: Zentralöffnung
- 40,42: Lagerungselement
- 44: Fluidströmungskanäle
- 46: Trennelement
- 48: Strömungsraum
- 50: Strömungsraumbereich
- 52,52',54',54': Reibbeläge
- 55: Drehachse
- 56,56': Trägerbauteil
- 58,58': Trägerring
- 60,60': Trägerbauteilsegmente
- 61: Anbindungen
- 62,62',64,64': Reibbelagssegmente
- 66,67: Kopplungsvorsprünge
- 68,68': Aussparungen
- 70,70',72,72': umfangsseitige Begrenzungsränder der Trägerbauteilsegmente
- 74,74',76,76': Fluidförderflächen
- 77,77',78,78': umfangsseitige Begrenzungsränder der Reibbelagsegmente
- 80: Pumpenlamelle
- 82: Turbinenlamelle
- 84,86: Zwischenlamelle
- 88,88': Durchgänge
- 90,90': Durchlässe
- 92,92': Strömungskanal
- 94: umfangsseitige Begrenzungsränder der Zwischenlamelle
- 96: Fluidförderbereich
- 98,99: Gegenkopplungsvorsprünge

## Patentansprüche

1. Kupplungsanordnung für ein Kraftfahrzeug, umfassend ein mit fluidförmigem Fördermedium befülltes Kupplungsgehäuse (5), mindestens ein mit dem Kupplungsgehäuse (5) gemeinsam drehbares erstes Reibelement (22), wenigstens ein mit einem Abtriebsorgan (19) gemeinsam drehbares zweites Reibelement (24), das zur Herstellung einer Reibwechselwirkung in Wirkverbindung mit dem wenigstens einen ersten Reibelement (22) bringbar ist, wobei wenigstens ein erstes Reibelement (22) und wenigstens ein zweites Reibelement (24) mit je einem Trägerbauteil (56, 56') versehen sind, die jeweils zur Aufnahme wenigstens eines Reibbelags (52, 52', 54, 54') vorgesehen sein können,
**dadurch gekennzeichnet, dass** die Trägerbauteile (56, 56') über in Umfangsrichtung aufeinander folgende Trägerbauteilsegmente (60, 60') verfügen, die an jeweils einem umfangsseitigen Begrenzungsrand (70, 72, 70', 72') mit Fluidförderflächen (74, 76, 74', 76') zur Erzeugung einer Fluidzirkulation versehen und zur Herstellung der Reibwechselwirkung mit Reibbelägen (52, 52', 54, 54') in Form von Reibbelagssegmenten (62, 64, 62' 64') ausgebildet sind, wobei die Fluidförderflächen (74, 76, 74', 76') an je eine Aussparung (68, 68') des Trägerbauteils (56, 56') angrenzen und in Zusammenwirkung mit jeweils einem benachbarten Reibelement (22, 24) zur Bildung von axial begrenzten Strömungskanälen (92, 92') dienen.

2. Kupplungsanordnung nach Anspruch 1,
**dadurch gekennzeichnet, dass** bei Verwendung des umfangsseitigen Begrenzungsrandes (70, 72, 70', 72') eines Trägerbauteilsegmentes (60, 60') als Fluidförderfläche (74, 76, 74', 76') die Wirkfläche für das Fördermedium von der radialen Ausdehnung der Aussparung (68, 68') sowie vom Materialquerschnitt zumindest des Trägerbauteilsegmentes (60, 60') an der Stelle des umfangsseitigen Begrenzungsrandes (70, 72, 70', 72') abhängig ist.

3. Kupplungsanordnung nach Anspruch 1 oder 2,
**dadurch gekennzeichnet, dass** bei Ausbildung des Trägerbauteils (56, 56') an wenigstens einer seiner Axialseiten mit zumindest einem Reibbelagsegment (62, 64, 62' 64') und bei Anordnung desselben mit zum umfangsseitigen Begrenzungsrand (70, 72, 70', 72') des Trägerbauteilsegmentes (60, 60') im wesentlichen bündigem umfangsseitigen Ende des Reibbelagsegmentes (62, 64, 62' 64') die Fluidförderfläche (74, 76, 74', 76') für das Fördermedium eine Vergrößerung erfährt.

4. Kupplungsanordnung nach Anspruch 1, 2 oder 3,
**dadurch gekennzeichnet, dass** jedes Reibbelagsegment (62, 64, 62' 64') in Umfangsrichtung zwischen je zwei umfangsseitigen Begrenzungsrändern (70, 72, 70', 72') eines Trägerbauteilsegmentes (60, 60') an demselben angeordnet ist.

5. Kupplungsanordnung nach Anspruch 1, 2, 3 oder 4,
**dadurch gekennzeichnet, dass** der Trägerbauteil (56, 56') mit einem Trägerring (58, 58') ausgebildet ist, von dem aus sich die Trägerbauteilsegmente (60, 60') in radialer Richtung erstrecken.

6. Kupplungsanordnung nach Anspruch 5,
**dadurch gekennzeichnet, dass** der Trägerring (58) mit Kopplungsvorsprüngen (66) ausgebildet ist, über die er mit dem Kupplungsgehäuse (5) in formschlüssiger Drehverbindung steht.

7. Kupplungsanordnung nach Anspruch 5,
**dadurch gekennzeichnet, dass** der Trägerring (58') mit Kopplungsvorsprüngen (67) ausgebildet ist, über die er mit dem Abtriebselement (19) in formschlüssiger Drehverbindung steht.

8. Kupplungsanordnung nach Anspruch 5 oder 6,
**dadurch gekennzeichnet, dass** die Kopplungsvorsprünge (66) am Trägerring (58) an dessen radialem Außenrand und die Trägerbauteilsegmente (60) an dessen radialem Innenrand vorgesehen sind.

9. Kupplungsanordnung nach Anspruch 5 oder 7,
**dadurch gekennzeichnet, dass** die Kopplungsvorsprünge (67) am Trägerring (58') an dessen radialem Innenrand und die Trägerbauteilsegmente (60') an dessen radialem Außenrand vorgesehen sind.

10. Kupplungsanordnung nach Anspruch 8 oder 9,
**dadurch gekennzeichnet, dass** die Trägerbauteilsegmente (60, 60') im wesentlichen über ihre gesamte radiale Ausdehnung mit Reibbelagsegmenten (62, 64, 62' 64') versehen sind.

11. Kupplungsanordnung nach Anspruch 8 oder 9,
**dadurch gekennzeichnet, dass** die Trägerbauteilsegmente (60, 60') lediglich entlang eines Teils ihrer radialen Ausdehnung mit Reibbelagsegmenten (62, 64, 62' 64') versehen sind.

12. Kupplungsanordnung nach Anspruch 10 oder 11,
**dadurch gekennzeichnet, dass** die Trägerbauteilsegmente (60, 60') die Reibbelagsegmente (62, 64, 62' 64') bündig mit ihrem radialen Außenrand aufnehmen.

13. Kupplungsanordnung nach Anspruch 10,
**dadurch gekennzeichnet, dass** die Trägerbauteilsegmente (60, 60') die Reibbelagsegmente (62, 64, 62' 64') bündig mit ihrem radialen Innenrand aufnehmen.

14. Kupplungsanordnung nach einem der Ansprüche 8 bis 13,
**dadurch gekennzeichnet, dass** am Trägerring (58, 58') in Umfangsrichtung zwischen je zwei Kopplungsvorsprüngen (66, 67) je ein Durchlass (90, 90') für das Fördermedium vorgesehen ist.

15. Kupplungsanordnung nach Anspruch 14,
**dadurch gekennzeichnet, dass** die Kopplungsvorsprünge (66, 67) zur Vergrößerung der Durchlässe (90, 90') radial weiter als zur Drehsicherung bei vorbestimmter Momentenübertragungsfähigkeit erforderlich über den Trägerring (58, 58') hinausgeführt sind.

16. Kupplungsanordnung nach Anspruch 15,
**dadurch gekennzeichnet, dass** in Umfangsrichtung auf einen Teil der Kopplungsvorsprünge (66, 67) zur Vergrößerung der Durchlässe (90, 90') verzichtet ist.

17. Kupplungsanordnung nach Anspruch 15 oder 16,
**dadurch gekennzeichnet, dass** die Kopplungsvorsprünge (66, 67) zur Vergrößerung der Durchlässe (90, 90') mit Durchgängen (88, 88') im Trägerring (58, 58') zusammenwirken, die an dem von den Kopplungsvorsprüngen (66, 67) jeweils abgewandten Rand des Trägerrings (58, 58') vorgesehen sind, und zwar, in Umfangsrichtung gesehen, jeweils zwischen zwei Anbindungen (61) für Trägerbauteilsegmente (60, 60').

18. Kupplungsanordnung nach einem der Ansprüche 15 bis 17,
**dadurch gekennzeichnet, dass** den Durchlässen (90, 90') ebenso wie den Durchgängen (88, 88') jeweils einer der Strömungskanäle (92, 92') für das Fördermedium zugeordnet ist.

19. Kupplungsanordnung nach einem der Ansprüche 1 bis 18,
**dadurch gekennzeichnet, dass** der Strömungskanal (92, 92') für Fördermedium in Radialrichtung jeweils durch den von den Kopplungsvorsprüngen (66, 67) abgewandten Rand des Trägerrings (58, 58') begrenzt ist.

20. Kupplungsanordnung nach Anspruch 19,
**dadurch gekennzeichnet, dass** dem für Fördermedium vorgesehenen Strömungskanal (92, 92') eines Reibelementes (22, 24) in Achsrichtung jeweils ein Reibelement (22, 24) zugeordnet ist, bei welchem bei Verzicht auf Durchgänge (88, 88') oder Durchlässe (90, 90') ein radialer Außendurchmesser vorgesehen ist, der nicht über das radial äußere Ende des Strömungskanals (92) hinausreicht, oder aber ein radialer Innendurchmesser vorhanden ist, der nicht über das radial innere Ende des Strömungskanals (92') hinausreicht.

21. Kupplungsanordnung nach Anspruch 18, 19 oder 20,
**dadurch gekennzeichnet, dass** der Strömungskanal (92, 92') für Fördermedium in Achsrichtung jeweils außer durch den Materialquerschnitt des Trägerbauteils (56, 56') auch durch den Materialquerschnitt des wenigstens an einer Axialseite des Trägerbauteils (56, 56') vorgesehenen Reibbelagsegmentes (62, 64, 62', 64') begrenzt ist.

22. Kupplungsanordnung nach einem der Ansprüche 1 bis 21,
**dadurch gekennzeichnet, dass** axial zwischen je zwei Elementen - erstes Reibelement (22) oder zweites Reibelement (24) - eine als Reibelement (22, 24) wirksame Zwischenlamelle (84, 86) angeordnet ist, deren dem jeweils benachbarten Reibelement (22, 24) zugewandten Axialseiten als Anlageflächen für die Reibbelagsegmente (62, 64, 62' 64') der Reibelemente (22, 24) dienen und die entweder über Durchlässe (90, 90') und/oder Durchgänge (88, 88') für Fördermedium verfügt, die jeweils mit Durchlässen (90, 90') und/oder Durchgängen (88, 88') der anderen Reibelemente (22, 24) fluchten, oder die bei Verzicht auf Durchgänge (88, 88') oder Durchlässe (90, 90') über einen radialen Außendurchmesser verfügt, der nicht über das radial äußere Ende des Strömungskanals (92) eines benachbarten ersten Reibelemtes (22) hinausreicht, oder aber über einen radialen Innendurchmesser verfügt, der nicht über das radial innere Ende des Strömungskanals (92') eines benachbarten zweiten Reibelementes (24) hinausreicht.

23. Kupplungsanordnung nach Anspruch 21 oder 22,
**dadurch gekennzeichnet, dass** ein größerer Materialquerschnitt der Reibbelagsegmente (62, 64, 62' 64') gegenüber dem Materialquerschnitt des Trägerbauteils (56, 56') oder dem Materialquerschnitt der Zwischenlamelle (84, 86) einen Übertritt des Fördermediums zu dem jeweils axial benachbarten Reibelement (22, 24) mit geringem Strömungsimpulsanteil in Umfangsrichtung bewirkt.

24. Kupplungsanordnung nach Anspruch 23,
**dadurch gekennzeichnet, dass** bei beidseitiger Ausbildung der ersten Reibelemente (22) und der zweiten Reibelemente (24) mit Reibbelagsegmenten (62, 64, 62' 64') die letztgenannten auf einer Axialseite mit geringerer Materialstärke als auf der anderen Axialseite ausgebildet sein können.

25. Kupplungsanordnung nach Anspruch 24,
**dadurch gekennzeichnet, dass** die Reibbelagsegmente (62, 64, 62' 64') aus einem Kompositwerkstoff, wie Kohlefaserwerkstoff, hergestellt sind.

26. Kupplungsanordnung nach einem der Ansprüche 1 bis 25,
**dadurch gekennzeichnet, dass** die Menge der auf jeweils einer Axialseite von erstem Reibelement (22) oder zweitem Reibelement (24) vorgesehenen Reibbelagsegmente (62, 64, 62' 64') ungeradzahlig ist.

27. Kupplungsanordnung nach Anspruch 26,
**dadurch gekennzeichnet, dass** als ungeradzahlige Menge für die Reibbelagsegmente (62, 64, 62' 64') Primzahlen zugrunde gelegt werden.

28. Kupplungsanordnung nach einem der Ansprüche 3 bis 27,
**dadurch gekennzeichnet, dass** die Menge der Reibbelagsegmente (62, 64, 62' 64') in Abhängigkeit des maximal übertragbaren Drehmomentes bemessen ist.

29. Kupplungsanordnung nach einem der Ansprüche 1 bis 28,
**dadurch gekennzeichnet, dass** das erste Reibelement (22) oder das zweite Reibelement (24) im wesentlichen ebenflächig ausgebildet ist.

30. Kupplungsanordnung nach einem der Ansprüche 1 bis 29,
**dadurch gekennzeichnet, dass** zumindest eine der Fluidförderflächen (74, 76, 74', 76') in Radialrichtung von einer im wesentlichen geradlinigen Erstreckungsrichtung abweicht und wenigstens über einen Fluidförderbereich (96) mit einer sich in Umfangsrichtung ändernden Verlaufskomponente verfügt.

31. Kupplungsanordnung nach Anspruch 30,
**dadurch gekennzeichnet, dass** die sich in Umfangsrichtung ändernde Verlaufskomponente des Fluidförderbereichs (96) durch eine in Radialrichtung gekrümmte Fluidförderfläche gebildet ist.

32. Kupplungsanordnung nach einem der Ansprüche 1 bis 31,
**dadurch gekennzeichnet, dass** die Anzahl und Bemessung der Strömungskanäle (92, 92') vom Kühlungsbedarf im Bereich der Reibbelagsegmente (62, 64, 62' 64') abhängig ist.

33. Kupplungsanordnung nach einem der Ansprüche 1 bis 32,
**dadurch gekennzeichnet, dass** zumindest eine der Fluidförderflächen (74, 76, 74', 76') wenigstens über einen Fluidförderbereich verfügt, der von einer im wesentlichen achsparallelen Erstreckungsebene abweicht.

## Claims

1. Clutch arrangement for a motor vehicle, comprising a clutch housing (5) which is filled with fluid delivery medium, at least one first friction element (22) which can rotate jointly with the clutch housing (5), at least one second friction element (24) which can rotate jointly with an output element (19) and can be brought into an operative connection with the at least one first friction element (22) in order to produce frictional interaction, at least one first friction element (22) and at least one second friction element (24) being provided with in each case one carrier component (56, 56') which can be provided in each case for receiving at least one friction lining (52, 52', 54, 54'), **characterized in that** the carrier components (56, 56') have carrier-component segments (60, 60') which follow one another in the circumferential direction and are provided with fluid-delivery faces (74, 76, 74', 76') in order to generate a fluid circulation on in each case one circumferential limiting edge (70, 72, 70', 72') and are configured with friction linings (52, 52', 54, 54') in the form of friction-lining segments (62, 64, 62', 64') in order to produce the frictional interaction, the fluid-delivery faces (74, 76, 74', 76') adjoining in each case one cut-out (68, 68') of the carrier component (56, 56') and serving to form axially delimited flow channels (92, 92') in interaction with in each case one adjacent friction element (22, 24).

2. Clutch arrangement according to Claim 1, **characterized in that**, if the circumferential limiting edge (70, 72, 70', 72') of a carrier-component segment (60, 60') is used as fluid-delivery face (74, 76, 74', 76'), the active surface area for the delivery medium is dependent on the radial extent of the cut-out (68, 68') and on the material cross section at least of the carrier-component segment (60, 60') at the location of the circumferential limiting edge (70, 72, 70', 72').

3. Clutch arrangement according to Claim 1 or 2, **characterized in that**, if the carrier component (56, 56') is configured with at least one friction-lining segment (62, 64, 62', 64') on at least one of its axial sides and if the former is arranged with a circumferential end of the friction-lining segment (62, 64, 62', 64') which is substantially flush with respect to the circumferential limiting edge (70, 72, 70', 72') of the carrier-component segment (60, 60'), the fluid-delivery face (74, 76, 74', 76') for the delivery medium is enlarged.

4. Clutch arrangement according to Claim 1, 2 or 3, **characterized in that** each friction-lining segment (62, 64, 62', 64') is arranged on a carrier-component segment (60, 60') in the circumferential direction between in each case two circumferential limiting edges (70, 72, 70', 72') of the said carrier-component segment (60, 60').

5. Clutch arrangement according to Claim 1, 2, 3 or 4, **characterized in that** the carrier component (56, 56') is configured with a carrier ring (58, 58'), from which the carrier-component segments (60, 60') extend in the radial direction.

6. Clutch arrangement according to Claim 5, **characterized in that** the carrier ring (58) is configured with coupling projections (66), via which it is rotationally connected to the clutch housing (5) in a form-fitting manner.

7. Clutch arrangement according to Claim 5, **characterized in that** the carrier ring (58') is configured with coupling projections (67), via which it is rotationally connected to the output element (19) in a form-fitting manner.

8. Clutch arrangement according to Claim 5 or 6, **characterized in that** the coupling projections (66) are provided on the carrier ring (58) on its radial outer edge and the carrier-component segments (60) are provided on its radial inner edge.

9. Clutch arrangement according to Claim 5 or 7, **characterized in that** the coupling projections (67) are provided on the carrier ring (58') on its radial inner edge and the carrier-component segments (60') are provided on its radial outer edge.

10. Clutch arrangement according to Claim 8 or 9, **characterized in that** the carrier-component segments (60, 60') are provided with friction-lining segments (62, 64, 62', 64') substantially over their entire radial extent.

11. Clutch arrangement according to Claim 8 or 9, **characterized in that** the carrier-component segments (60, 60') are provided with friction-lining segments (62, 64, 62', 64') only along a part of their radial extent.

12. Clutch arrangement according to Claim 10 or 11, **characterized in that** the carrier-component segments (60, 60') receive the friction-lining segments (62, 64, 62', 64') in a flush manner with their radial outer edge.

13. Clutch arrangement according to Claim 10, **characterized in that** the carrier-component segments (60, 60') receive the friction-lining segments (62, 64, 62', 64') in a flush manner with their radial inner edge.

14. Clutch arrangement according to one of Claims 8 to 13, **characterized in that** in each case one passage (90, 90') is provided for the delivery medium on the carrier ring (58, 58') in the circumferential direction between in each case two coupling projections (66, 67).

15. Clutch arrangement according to Claim 14, **characterized in that**, in order to enlarge the passages (90, 90'), the coupling projections (66, 67) are guided radially further beyond the carrier ring (58, 58') than is required for the anti-rotation safeguard with a predefined capability to transmit moments.

16. Clutch arrangement according to Claim 15, **characterized in that** part of the coupling projections (66, 67) is dispensed with in the circumferential direction, in order to enlarge the passages (90, 90').

17. Clutch arrangement according to Claim 15 or 16, **characterized in that**, in order to enlarge the passages (90, 90'), the coupling projections (66, 67) interact with leadthroughs (88, 88') in the carrier ring (58, 58') which are provided on that edge of the carrier ring (58, 58') which faces away in each case from the coupling projections (66, 67), to be precise, as viewed in the circumferential direction, in each case between two connections (61) for carrier-component segments (60, 60').

18. Clutch arrangement according to one of Claims 15 to 17, **characterized in that**, just like the leadthroughs (88, 88'), the passages (90, 90') are assigned in each case one of the flow channels (92, 92') for the delivery medium.

19. Clutch arrangement according to one of Claims 1 to 18, **characterized in that** the flow channel (92, 92') for delivery medium is delimited in the radial direction in each case by that edge of the carrier ring (58, 58') which faces away from the coupling projections (66, 67).

20. Clutch arrangement according to Claim 19, **characterized in that that** flow channel (92, 92') of a friction element (22, 24) which is provided for delivery medium is assigned, in the axial direction, in each case one friction element (22, 24), in which, with the omission of leadthroughs (88, 88') or passages (90, 90'), a radial external diameter is provided which does not reach beyond the radially outer end of the flow channel (92), or there is a radial internal diameter which does not reach beyond the radially inner end of the flow channel (92').

21. Clutch arrangement according to Claim 18, 19 or 20, **characterized in that** the flow channel (92, 92') for delivery medium is delimited in the axial direction in each case, in addition to by the material cross section of the carrier component (56, 56'), also by the material cross section of the friction-lining segment (62, 64, 62', 64') which is provided at least on one axial side of the carrier component (56, 56').

22. Clutch arrangement according to one of Claims 1 to 21, **characterized in that** an intermediate disc (84, 86) which acts as a friction element (22, 24) is arranged axially between in each case two elements, first friction element (22) or second friction element (24), the axial sides of which intermediate disc (84, 86) which face the respectively adjacent friction element (22, 24) serve as contact faces for the friction-lining segments (62, 64, 62', 64') of the friction elements (22, 24), and which intermediate disc (84, 86) has either passages (90, 90') and/or leadthroughs (88, 88') for delivery medium which are aligned in each case with passages (90, 90') and/or leadthroughs (88, 88') of the other friction elements (22, 24), or which intermediate disc (84, 86), if leadthroughs (88, 88') or passages (90, 90') are omitted, has a radial external diameter which does not reach beyond the radially outer end of the flow channel (92) of an adjacent first friction element (22), or else has a radial internal diameter which does not reach beyond the radially inner end of the flow channel (92') of an adjacent second friction element (24).

23. Clutch arrangement according to Claim 21 or 22, **characterized in that** a greater material cross section of the friction-lining segments (62, 64, 62', 64') in comparison with the material cross section of the carrier component (56, 56') or the material cross section of the intermediate disc (84, 86) brings about a transfer of the delivery medium to the respectively axially adjacent friction element (22, 24) with a low flow pulse proportion in the circumferential direction.

24. Clutch arrangement according to Claim 23, **characterized in that**, if the first friction elements (22) and the second friction elements (24) are configured with friction-lining segments (62, 64, 62', 64') on both sides, the said friction-lining segments (62, 64, 62', 64') can be configured with a smaller material thickness on one axial side than on the other axial side.

25. Clutch arrangement according to Claim 24, **characterized in that** the friction-lining segments (62, 64, 62', 64') are produced from a composite material, such as carbon fibre material.

26. Clutch arrangement according to one of Claims 1 to 25, **characterized in that** there is an odd number of friction-lining segments (62, 64, 62', 64') which are provided on in each case one axial side of a first friction element (22) or a second friction element (24).

27. Clutch arrangement according to Claim 26, **characterized in that** primary numbers are taken as the basis for the odd number of friction-lining segments (62, 64, 62', 64').

28. Clutch arrangement according to one of Claims 3 to 27, **characterized in that** the number of friction-lining segments (62, 64, 62', 64') is dimensioned as a function of the maximum torque which can be transmitted.

29. Clutch arrangement according to one of Claims 1 to 28, **characterized in that** the first friction element (22) or the second friction element (24) is of substantially planar configuration.

30. Clutch arrangement according to one of Claims 1 to 29, **characterized in that** at least one of the fluid-delivery faces (74, 76, 74', 76') deviates in the radial direction from a substantially rectilinear direction of extent and at least has a fluid-delivery region (96) with a profile component which changes in the circumferential direction.

31. Clutch arrangement according to Claim 30, **characterized in that** the profile component of the fluid-delivery region (96) which changes in the circumferential direction is formed by a fluid-delivery face which is curved in the radial direction.

32. Clutch arrangement according to one of Claims 1 to 31, **characterized in that** the number and dimensions of the flow channels (92, 92') is dependent on the cooling requirement in the region of the friction-lining segments (62, 64, 62', 64').

33. Clutch arrangement according to one of Claims 1 to 32, **characterized in that** at least one of the fluid-delivery faces (74, 76, 74', 76') at least has a fluid-delivery region which deviates from a substantially axially parallel plane of extent.

## Revendications

1. Ensemble d'embrayage pour un véhicule automobile, comprenant un carter d'embrayage (5) rempli d'agent véhiculé sous forme de fluide, au moins un premier élément de friction (22) rotatif conjointement avec le carter d'embrayage (5), et au moins un deuxième élément de friction (24) qui est rotatif conjointement avec un organe mené (19) et qui peut être amené en liaison fonctionnelle avec le premier élément de friction (22) au moins unique afin de réaliser une interaction de friction, sachant qu'au moins un premier élément de friction (22) et au moins un deuxième élément de friction (24) sont chacun pourvus d'un élément porteur (56, 56') qui peut être respectivement prévu pour recevoir au moins une garniture de friction (52, 52', 54, 54'), **caractérisé en ce que** les éléments porteurs (56, 56') disposent de segments (60, 60') d'élément porteur se succédant en direction circonférentielle, qui sont pourvus sur un bord de délimitation circonférentiel respectif (70, 72, 70', 72') de surfaces (74, 76, 74', 76') de transport de fluide pour produire une circulation de fluide et qui sont réalisés sous forme de segments (62, 64, 62', 64') de garniture de friction pour réaliser l'interaction de friction avec des garnitures de friction (52, 52', 54, 54'), les surfaces (74, 76, 74', 76') de transport de fluide étant limitrophes d'un évidement respectif (68, 68') de l'élément porteur (56, 56') et servant, en coopération avec un élément de friction voisin respectif (22, 24), à former des canaux d'écoulement (92, 92') axialement délimités.

2. Ensemble d'embrayage selon la revendication 1, **caractérisé en ce que**, en cas d'utilisation du bord de délimitation circonférentiel (70, 72, 70', 72') d'un segment (60, 60') d'élément porteur comme surface (74, 76, 74', 76') de transport de fluide, la surface active pour l'agent véhiculé est fonction de l'étendue radiale de l'évidement (68, 68') et de la section de matériau au moins du segment (60, 60') d'élément porteur à l'endroit du bord de délimitation circonférentiel (70, 72, 70', 72').

3. Ensemble d'embrayage selon la revendication 1 ou 2, **caractérisé en ce que**, en cas de réalisation de l'élément porteur (56, 56') avec au moins un segment (62, 64, 62', 64') de garniture de friction sur au moins un de ses côtés axiaux et en cas de disposition de cet élément avec l'extrémité circonférentielle du segment (62, 64, 62', 64') de garniture de friction sensiblement à fleur du bord de délimitation circonférentiel (70, 72, 70', 72') du segment (60, 60') d'élément porteur, la surface (74, 76, 74', 76') de transport de fluide pour l'agent véhiculé subit un agrandissement.

4. Ensemble d'embrayage selon la revendication 1, 2 ou 3, **caractérisé en ce que** chaque segment (62, 64, 62', 64') de garniture de friction est disposé sur un segment (60, 60') d'élément porteur, en direction circonférentielle, entre deux bords de délimitation circonférentiels respectifs (70, 72, 70', 72') de ce segment.

5. Ensemble d'embrayage selon la revendication 1, 2, 3 ou 4, **caractérisé en ce que** l'élément porteur (56, 56') est réalisé avec une bague porteuse (58, 58') à partir de laquelle les segments (60, 60') d'élément porteur s'étendent en direction radiale.

6. Ensemble d'embrayage selon la revendication 5, **caractérisé en ce que** la bague porteuse (58) est réalisée avec des saillies d'accouplement (66) via lesquelles elle se trouve en liaison rotative positive avec le carter d'embrayage (5).

7. Ensemble d'embrayage selon la revendication 5, **caractérisé en ce que** la bague porteuse (58') est réalisée avec des saillies d'accouplement (67) via lesquelles elle se trouve en liaison rotative positive avec l'organe mené (19).

8. Ensemble d'embrayage selon la revendication 5 ou 6, **caractérisé en ce que** les saillies d'accouplement (66) sur la bague porteuse (58) sont prévues sur son bord radial extérieur et les segments (60) d'élément porteur sur son bord radial intérieur.

9. Ensemble d'embrayage selon la revendication 5 ou 7, **caractérisé en ce que** les saillies d'accouplement (67) sur la bague porteuse (58') sont prévues sur son bord radial intérieur et les segments (60') d'élément porteur sur son bord radial extérieur.

10. Ensemble d'embrayage selon la revendication 8 ou 9, **caractérisé en ce que** les segments (60, 60') d'élément porteur sont pourvus de segments (62, 64, 62', 64') de garniture de friction sensiblement sur toute leur étendue radiale.

11. Ensemble d'embrayage selon la revendication 8 ou 9, **caractérisé en ce que** les segments (60, 60') d'élément porteur ne sont pourvus de segments (62, 64, 62', 64') de garniture de friction que le long d'une partie de leur étendue radiale.

12. Ensemble d'embrayage selon la revendication 10 ou 11, **caractérisé en ce que** les segments (60, 60') d'élément porteur reçoivent les segments (62, 64, 62', 64') de garniture de friction à fleur de leur bord radial extérieur.

13. Ensemble d'embrayage selon la revendication 10, **caractérisé en ce que** les segments (60, 60') d'élément porteur reçoivent les segments (62, 64, 62', 64') de garniture de friction à fleur de leur bord radial intérieur.

14. Ensemble d'embrayage selon l'une quelconque des revendications 8 à 13, **caractérisé en ce qu'**un passage respectif (90, 90') pour l'agent véhiculé est prévu sur la bague porteuse (58, 58'), en direction circonférentielle, entre deux saillies d'accouplement respectives (66, 67).

15. Ensemble d'embrayage selon la revendication 14, **caractérisé en ce que** les saillies d'accouplement (66, 67) sont, afin d'agrandir les passages (90, 90'), dirigées au-delà de la bague porteuse (58, 58') radialement plus que ne le nécessite le blocage en rotation pour une capacité prédéterminée de transmission de couple.

16. Ensemble d'embrayage selon la revendication 15, **caractérisé en ce que**, afin d'agrandir les passages (90, 90'), on renonce en direction circonférentielle à une partie des saillies d'accouplement (66, 67).

17. Ensemble d'embrayage selon la revendication 15 ou 16, **caractérisé en ce que**, afin d'agrandir les passages (90, 90'), les saillies d'accouplement (66, 67) coopèrent avec des passages (88, 88') dans la bague porteuse (58, 58') qui sont prévus sur le bord de la bague porteuse (58, 58') qui est respectivement éloigné des saillies d'accouplement (66, 67), et ce, considéré en direction circonférentielle, chaque fois entre deux rattachements (61) pour les segments (60, 60') d'élément porteur.

18. Ensemble d'embrayage selon l'une quelconque des revendications 15 à 17, **caractérisé en ce qu'**un des canaux d'écoulement (92, 92') pour l'agent véhiculé est respectivement associé aux passages (90, 90') ainsi qu'aux passages (88, 88').

19. Ensemble d'embrayage selon l'une quelconque des revendications 1 à 18, **caractérisé en ce que** le canal d'écoulement (92, 92') pour l'agent véhiculé est respectivement délimité en direction radiale par le bord de la bague porteuse (58, 58') qui est éloigné des saillies d'accouplement (66, 67).

20. Ensemble d'embrayage selon la revendication 19, **caractérisé en ce que**, au canal d'écoulement (92, 92') d'un élément de friction (22, 24) qui est prévu pour l'agent véhiculé, on associe en direction radiale un élément de friction respectif (22, 24) pour lequel, en renonçant à des passages (88, 88') ou à des passages (90, 90'), on prévoit soit un diamètre extérieur radial qui ne s'étend pas au-delà de l'extrémité radialement extérieure du canal d'écoulement (92), soit un diamètre intérieur radial qui ne s'étend pas au-delà de l'extrémité radialement intérieure du canal d'écoulement (92').

21. Ensemble d'embrayage selon la revendication 18, 19 ou 20, **caractérisé en ce que** le canal d'écoulement (92, 92') pour l'agent véhiculé est respectivement délimité en direction axiale non seulement par la section du matériau de l'élément porteur (56, 56'), mais aussi par la section de matériau du segment (62, 64, 62', 64') de garniture de friction prévu au moins sur un côté axial de l'élément porteur (56, 56').

22. Ensemble d'embrayage selon l'une quelconque des revendications 1 à 21, **caractérisé en ce qu'**un disque intermédiaire (84, 86) actif comme élément de friction (22, 24) est disposé axialement entre deux éléments respectifs - premier élément de friction (22) ou deuxième élément de friction (24) -, disque dont les côtés axiaux tournés vers l'élément de friction voisin respectif (22, 24) servent de surfaces d'application pour les segments (62, 64, 62', 64') de garniture de friction des éléments de friction (22, 24) et qui dispose de passages (90, 90') et/ou de passages (88, 88') pour l'agent véhiculé qui sont respectivement alignés avec les passages (90, 90') et/ou les passages (88, 88') des autres éléments de friction (22, 24), ou bien qui, en renonçant aux passages (88, 88') ou aux passages (90, 90'), dispose soit d'un diamètre extérieur radial ne s'étendant pas au-delà de l'extrémité radialement extérieure du canal d'écoulement (92) d'un premier élément de friction voisin (22), soit d'un diamètre intérieur radial ne s'étendant pas au-delà de l'extrémité radialement intérieure du canal d'écoulement (92') d'un deuxième élément de friction voisin (24).

23. Ensemble d'embrayage selon la revendication 21 ou 22, **caractérisé en ce qu'**une plus grande section de matériau des segments (62, 64, 62', 64') de garniture de friction par rapport à la section de matériau de l'élément porteur (56, 56') ou à la section de matériau du disque intermédiaire (84, 86) produit un débordement de l'agent véhiculé vers l'élément de friction axialement voisin respectif (22, 24) avec une faible part d'impulsion d'écoulement en direction circonférentielle.

24. Ensemble d'embrayage selon la revendication 23, **caractérisé en ce que**, en cas de réalisation des premiers éléments de friction (22) et des deuxièmes éléments de friction (24) avec des segments (62, 64, 62', 64') de garniture de friction des deux côtés, ces segments peuvent être réalisés avec une plus faible épaisseur de matériau sur un côté axial que sur l'autre côté axial.

25. Ensemble d'embrayage selon la revendication 24, **caractérisé en ce que** les segments (62, 64, 62', 64') de garniture de friction sont réalisés en un matériau composite, comme un matériau à base de fibres de carbone.

26. Ensemble d'embrayage selon l'une quelconque des revendications 1 à 25, **caractérisé en ce que** la quantité de segments (62, 64, 62', 64') de garniture de friction prévue sur un côté axial respectif du premier élément de friction (22) ou du deuxième élément de friction (24) est impaire.

27. Ensemble d'embrayage selon la revendication 26, **caractérisé en ce qu'**on utilise comme quantité impaire pour les segments (62, 64, 62', 64') de garniture de friction des nombres premiers.

28. Ensemble d'embrayage selon l'une quelconque des revendications 3 à 27, **caractérisé en ce que** la quantité de segments (62, 64, 62', 64') de garniture de friction est prévue en fonction du couple maximal transmissible.

29. Ensemble d'embrayage selon l'une quelconque des revendications 1 à 28, **caractérisé en ce que** le premier élément de friction (22) ou le deuxième élément de friction (24) est réalisé à surface essentiellement plane.

30. Ensemble d'embrayage selon l'une quelconque des revendications 1 à 29, **caractérisé en ce qu'**au moins une des surfaces (74, 76, 74', 76') de transport de fluide s'écarte en direction radiale d'une direction de développement sensiblement rectiligne et dispose d'au moins une région de transport de fluide (96) ayant une composante de développement variant en direction circonférentielle.

31. Ensemble d'embrayage selon la revendication 30, **caractérisé en ce que** la composante de développement variant en direction circonférentielle de la région de transport de fluide (96) est formée par une surface de transport de fluide cintrée en direction radiale.

32. Ensemble d'embrayage selon l'une quelconque des revendications 1 à 31, **caractérisé en ce que** le nombre et le dimensionnement des canaux d'écoulement (92, 92') est fonction du besoin de refroidissement dans la région des segments (62, 64, 62', 64') de garniture de friction.

33. Ensemble d'embrayage selon l'une quelconque des revendications 1 à 32, **caractérisé en ce qu'**au moins une des surfaces (74, 76, 74', 76') de transport de fluide dispose d'au moins une région de transport de fluide qui s'écarte d'un plan de développement essentiellement parallèle à l'axe.
